# EUROPEAN PATENT APPLICATION

(11) **EP 2 424 207 A1**
(43) Date of publication of application: **29.02.2012**
(21) Application number: 10767190.1
(22) Date of filing: 26.04.2010
(51) Int. Cl.: H04M 11/00, G06Q 50/00, H04N 7/18

(54) **MONITORING SYSTEM**

(30) Priority: 24.04.2009 JP 2009105858
(71) Applicant: Mizuno, Yoshiro, Tokyo 113-0034 (JP)
(72) Inventor: KURITA Hiroshi, Fujisawa-shi Kanagawa 251-0032 (JP); MIZUNO, Yoshiro, Bunkyo-ku, Tokyo 113-0034 (JP)
(74) Representative: Epping - Hermann - Fischer
(86) International application number: PCT/JP2010/057388
(87) International publication number: WO 2010/123138

(57) **Abstract**

A system includes three locations of work areas (101, 102, and 103) each connected to a network (100), image-sound analyzing means (104), image-sound storing means (105), data managing means (106), a system control center (107), and a browser terminal (108). A part relating to image-capture and sound pickup inside the work area (101) includes a WEB camera, a microphone fixed to the WEB camera, an image-capture range, a marking indicating plate placed in the image-capture range, two stripe markings put on the surface of the marking indicating plate, and a two-dimensional bar-code put together with the stripe markings.

## Description

### Technical Field

The present invention relates to a system that monitors a work using an image-capture device, in particular, a monitoring system that performs a control upon recognizing a marking or a code provided in an image-capture target through image recognition.

### Background Art

Various systems that monitor a work through a video camera are utilized in order to suppress accidents and crimes. Conventional monitoring systems, however, just pick up an image of a work advancement and a work area where a work is being carried out using a video camera and record the image. When a work accident or a defect of a product relating to the work is found, if a trace of the cause and the range of the defect is attempted, it takes a time to find out a relating image from a large amount of video data. Accordingly, it is difficult to accomplish a traceability at a high level.

Moreover, conventional monitoring systems pick up an image with a whole image-capture area coming into focus on some level. It is necessary to find an image clearly picking up a trace target among all images for a long time. Accordingly, a trace work is inefficient.
Furthermore, a work monitoring system is also known which is provided with a sound microphone together with a video camera or which has a sound microphone disposed at an appropriate location in a work area, thereby recording a conversation through the work. In order to check whether or not the recorded conversation is a voice record relating to a desired work, however, it is necessary for a person involved in the duty to check the detail of the conversation in the recorded sound, so that it is inefficient from this point.

### Recording in accordance with Trigger

Patent document 1 discloses a system that records a clear image in accordance with a predetermined trigger. This system includes a plurality of cameras each having panning-tilting-zooming functions, and records an image of a monitoring target in response to various triggers, such as a trigger upon detection of a motion of an object through an analysis of a captured image, a trigger from a monitoring center, a trigger that is automatically generated for a certain cycle, and a trigger upon operation of an emergency button. This system is insufficient for recording, for example, a pharmaceutical operation at a medical institute like a dispensing pharmacy. This system is insufficient for realizing a traceability at a high level by clearly picking up an image of an image-capture target, starting image-capture in synchronization with a start timing of a pharmaceutical operation, and recording images with the captured image being associated with a prescription instruction.

### Improvement of Recognition Precision by Defining Area of Code and Character

A technology is already known which recognizes a predetermined pattern from a captured image and takes such a recognition as a trigger for a system control or which controls a system using information read from the recognized pattern. However, the recognition precision of the pattern still leaves a technical issue.
Patent document 2 discloses a technology of recognizing a bar-code in an image captured by a camera. Patent document 2 is based on a technical issue that is a difficulty of properly extracting the area of a bar-code with a fixed threshold since objects other than the recognition target, such as a character and a pattern, are mixed in the image. Moreover, patent document 2 discloses a technology of checking a pattern unique to a bar-code and a technology of setting a margin to a threshold used for determining a width of a bar, and of determining that it is equivalent when the bar width is within such a range. This system does not mainly focus on an image-capture of a bar-code as a marking, and cannot assure a sufficient recognition precision when a marking is recognized from a captured image of a pharmacy work.

### Prior Art Document

### Patent Document

Patent Document 1: Unexamined Japanese Patent Application KOKAI Publication No. 2002-32571; and
Patent Document 2: Japanese Patent No. 4163406

### Disclosure of Invention

### Problem to be solved by the Invention

It is an objective of the present disclosure to provide a monitoring system which highly precisely recognizes an image captured by an image-capture device including a WEB camera, records an image-capture-target work without any omission, quickly searches a relating image when a defect or an accident occurs, and realizes a traceability at a high level.

Moreover, it is another object of the present disclosure to evaluate a work at a pharmacy through an analysis utilizing a captured time of a recognized image, a recognized work area thereof, or a worker or the kind of prescription, and to assist the management of a workflow by displaying an evaluation result in a predetermined form.

### Means for Solving the Problem

The inventor of the present disclosure keenly examined in order to accomplish the above-explained objects, found out that a system with a high traceability can be realized by controlling a motion/still image-capture device including a WEB camera with RFID, and reaches the present disclosure.

A monitoring system according to a first aspect of the present disclosure is for a pharmacy work, and includes:
(1) a motion/still image-capture device including a WEB camera connected to a network, which sets an image-capture parameter in an image-capture range determined at each work area established in a pharmacy, successively captures images of work progression in the work area within the image-capture range, and transmits the captured image data to a predetermined transmission destination;
(2) a marking indicator which can be disposed in the image-capture range and freely moved by a worker having an intention of indicating that the work performed will be subjected to monitoring;
(3) image storing means which receives the image data, stores the received data, and connects to the network; and
(4) analyzing means which receives the image data, scans the image, extracts a marking area where two stripe markings intersect with each other at a right angle, recognizes the marking, and is connected to the network, wherein
when the marking is recognized by the analyzing means in the image data transmitted by the image-capture device, a scanned image area is specified as a bar-code area combining the marking area with the marking, an index at least including an image-capture time of the marking and a work area ID containing additional information read-out from the bar-code area is created, and the image data is stored in the image storing means associated with the index.

The marking indicator may be at least one selected from the group consisting of a work instruction for the work, a prescription holder, a medicine tray, and a prescription.

The marking indicator may be a work bench for carrying out the work in each work area, and the marking may be put on a work surface of the work bench.

An indication may be provided which indicates a position where the marking indicator is disposed within the image-capture range established in each work area, and which is used as a guide by the worker in the work area in order to place the marking or an object to be marked at an appropriate position for marking recognition.

The image may be a moving image, and video data relating to the work progression that may be established to be one work sequence based on the recognition or non-recognition of the marking is stored as a file.

Information included in the created index may be associated with a time recognized by the marking indicator moving the work area in accordance with a predetermined work flow, and workflow management assist information may be created with reference to at least one of the image-capture time, the work area ID, and a standard time set in advance for each work area or work.

### Effect of the Invention

According to the present disclosure, it becomes possible to provide an image-sound monitoring system which appropriately recognizes an image captured by a motion/still image-capture device including a WEB camera, records a work subjected to an image-capture without any omission, searches a relating image and sound quickly when a defect or an accident occurs, and realizes a traceability at a high level.

Moreover, it also becomes possible to evaluate a work at a pharmacy through an analysis of a captured time of a recognized image, a recognized work area thereof, or a worker or the kind of prescription, and to assist the management of a workflow by displaying an evaluation result in a predetermined form.

### Brief Description of Drawings

FIG. 1 is a general configuration diagram of a system of the present disclosure;
FIG. 2 is a configuration diagram of a work area 101;
FIG. 3 is a configuration diagram of a work area 102;
FIG. 4 is a configuration diagram of a work area 103;
FIG. 5A is a first flowchart showing an operation of an image-sound analyzing means 104;
FIG. 5B is a second flowchart showing an operation of the image-sound analyzing means 104;
FIG. 6 is a diagram showing an internal configuration of a marking pattern table 508;
FIG. 7A is a diagram showing an internal configuration of a code layout pattern table 509;
FIG. 7B is a diagram showing a modified example of a code area;
FIG. 8 is a diagram showing data items of information written in a two-dimensional bar-code;
FIG. 9 is a diagram showing data items configuring an index;
FIG. 10 is a flowchart of an image-sound analysis to an input image from the work area 102;
FIG. 11 is a flowchart of an image signal processing to an input image from the work area 103;
FIG. 12 is a diagram showing a configuration of a work area 1201;
FIG. 13 is a flowchart of an image-sound analysis to an image signal from the work area 1201;
FIG. 14 is a diagram showing a color recognition table;
FIG. 15 is a diagram showing a configuration of a work area 1501;
FIG. 16 is a diagram showing a configuration of a work area 1601;
FIG. 17 is a diagram showing a marking pattern table;
FIG. 18 is a diagram showing a character marking table;
FIG. 19 is a diagram showing a code layout pattern table;
FIG. 20 is a flowchart of an image-sound analysis to an image signal from the work area 1601;
FIG. 21 is a diagram showing a configuration of a work area 2101;
FIG. 22 is a diagram showing a motion pattern table;
FIG. 23 is a diagram showing a configuration of a work area 2301;
FIG. 24 is a flowchart of an image-sound analysis to a thermal image signal;
FIG. 25 is a diagram showing a configuration of a thermal image recognition table;
FIG. 26 is a flowchart of an operation of the image-sound analyzing means 104 to a sound signal;
FIG. 27 is a diagram showing a configuration of a sound recognition table;
FIG. 28 is a flowchart showing a recording operation of image and sound data;
FIG. 29 is a diagram showing a structure of stored data in image-sound storing means 105;
FIG. 30 is a diagram showing a structure of data referred for a workflow management;
FIG. 31 is a diagram showing an evaluation table;
FIG. 32 is a diagram showing workflow management assist information generated mainly focusing on an evaluation;
FIG. 33 is a diagram showing workflow management assist information generated mainly focusing on a work area;
FIG. 34 is a diagram showing a search screen;
FIG. 35 is a diagram showing a reference chart screen of a result of an image searching; and
FIG. 36 is a diagram showing an image relating to a selected work sequence.

### Best Mode for Carrying Out the Invention

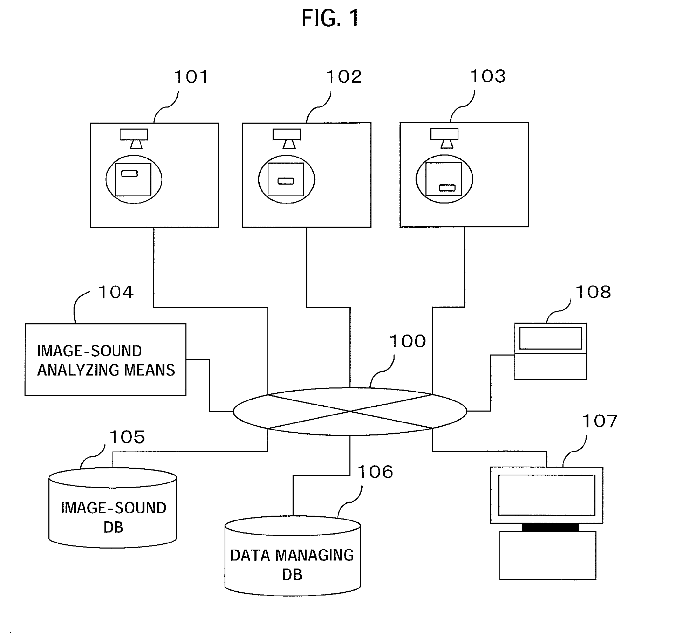

FIG. 1 is a general configuration diagram of a system according to an embodiment of the present disclosure. This system includes three work areas 101, 102, and 103 connected to a network 100, image-sound analyzing means 104, image-sound storing means (image-sound database) 105, data managing means (data managing database) 106, a system control center 107, and a browser terminal 108.
The system configuration shown in this embodiment is merely an example, and can be configured as needed in accordance with an element to be placed and a specific hardware device configuring the system. For example, the number of the work area locations is three, but the work area of the present disclosure is not limited to this example, and can be set as needed in accordance with a work area of a pharmacy. Moreover, one image-sound analyzing means 104 is provided over a network in order to perform an analysis in a concentrated manner, but the image-sound analyzing means may be provided in a one-on-one manner corresponding to an image-capture device or a microphone of each work area. Furthermore, the image-sound analyzing means may be integrated with an image-capture device in the matter of a hardware configuration.
Moreover, respective operations of the image-sound analyzing means 104, the image-sound storing means 105, the data managing means 106, and the system control center 107, and/or the like, are realized by a computer like a personal computer or a work station which includes a monitor, a keyboard, and a mouse, and/or the like, runs a program prepared in advance, and controls various devices. Such programs are recorded in a computer-readable recording medium, such as a hard disk, a flexible disk, a CD-ROM, an MO, and a DVD, read by the computer from the recording medium, and are operated by the user of the system.

### Kind of Marking and Configuration of Work Area: First Example

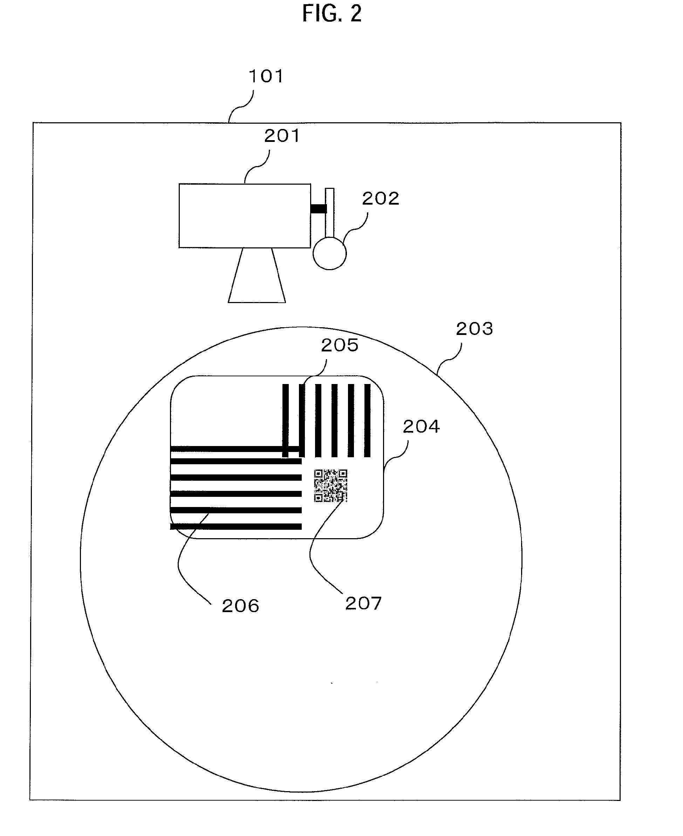

FIG. 2 is a configuration diagram showing a part in the system relating to an image-capture and sound recording inside a work area 101 that is one of the work areas. This part includes a WEB camera 201, a microphone 202 fixed to the WEB camera 201, an image-capture range 203, a marking indicating plate 204 placed in the image-capture range, two stripe markings 205 and 206 inscribed on the surface of the marking indicating plate., and a two-dimensional bar-code 207 put together with the stripe markings.
The code put together with the stripe markings is a two-dimensional bar-code, but the indication configuration applicable to the present disclosure is not limited to this configuration. A bar-code, a character marking, and/or the like, can also be adopted as needed.
The two stripe markings each have a directivity as will be discussed later, and a positional relationship with the code is set in advance. The system estimates the position of a code based on a plurality of markings or a mark and a screen magnification. This brings about an effect of remarkably reducing the load of an image scanning and computation up to a detection of a code.

The image-capture parameters of the WEB camera 201 are adjusted in accordance with the characteristics of a target work, a work place, and a brightness, and/or the like, in order to clearly pick up images of a prescription and a medicine, and/or the like, relating to the work. The WEB camera 201 captures an image of an image-capture range 203 at a predetermined cycle, and transmits an image signal including marked image-capture time and work area ID to a network. The microphone 202 is set to have a sound detecting range adjusted in accordance with the image-capture range 203, and to pick up sound relating to the work. The image-capture range 203 is adjusted to be a range covering the work in accordance with the characteristics of the work at the work area. A recorded sound signal that includes marked record time and a work area ID is transmitted to the network.
The image-capture parameters include at least one selected from the followings: a position of a focal point; an image-capture range; an object depth; a shutter speed; and a photosensitivity.
The marking indicating plate 204 is formed in appropriate size, shape, and weight in consideration of the convenience for a worker who carries the marking indicating plate and of the stability when the marking indicating plate is placed on a work bench, and/or the like. It is appropriate if the marking indicating plate 204 is in a size several cm by several cm, but the size thereof can be changed in accordance with the performance of the WEB camera 201 and the characteristics of the work.
The WEB camera is used as the image-capture device, but the image-capture device of the present disclosure is not limited to the WEB camera. Any image-capture device can be used as long as it is a motion/still image-capture device connectable to a network.
Moreover, the marking indicating plate 204 has two stripe markings and a two-dimensional bar-code put thereon together, but when the amount of information to be recognized is small and when it is attempted to grasp only the beginning and the end of the work, a configuration may be employed in which a stripe pattern or a geometric pattern is displayed.

### Kind of Marking and Configuration of Work Area: Second Example

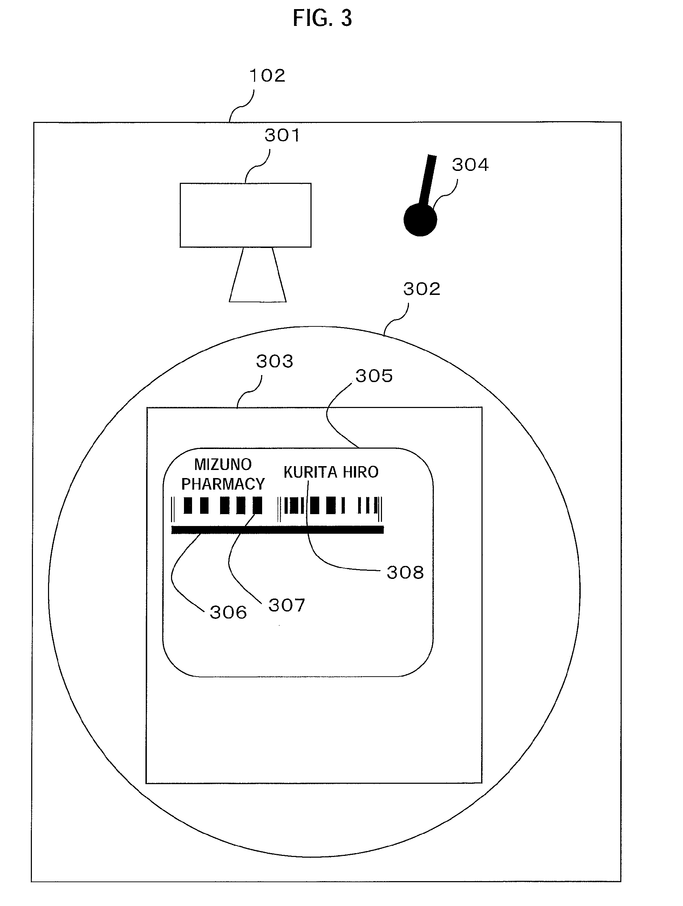

FIG. 3 is a configuration diagram showing a part relating to an image-capture and a sound recording inside the work area 102. This configuration includes a WEB camera 301, an image-capture range 302 adjusted so as to cover a work surface 303 of a desk, and/or the like, placed in the work area, a microphone 304 disposed at the work area, a work instruction 305 placed on the work surface, a line marking 306 that is a straight line displayed at a predetermined location of the work instruction, a bar-code 307 put along the line marking, and characters 308 put above the bar-code in parallel with the line marking and indicating a worker.
The image-capture parameters of the WEB camera 301 are adjusted in accordance with the characteristics of a target work, a work place, and a brightness, and/or the like, in order to clearly pick up images of the work instruction and a medicine, and/or the like, relating to the work. The image-capture range 302 is adjusted so as to cover the work surface 303.
The microphone 304 is set to have a sound detecting range adjusted in accordance with the image-capture range, and to pick up sound relating to the work. The WEB camera is used as the image-capture device, but the image-capture device of the present disclosure is not limited to the WEB camera. Any image-capture device can be used as long as it is a motion/still image-capture device connectable to a network 100.

Put on the face of the work instruction 305 is a geometric marking 306 that is a straight line. The bar-code 307 is put above the geometric marking 306 in parallel therewith. Furthermore, characters 308 indicating a name of a worker and a name of an organization where the worker belongs are put above the bar-code 307. Respective positional relationships and areas thereof are set in advance. In the flow of a recognition to be discussed later, this system scans respective recognition target areas extracted based on such positional relationship and area.
The geometric marking is put on the face of the work instruction, but an object on which the marking is put of the present disclosure is not limited to this example, and one which is associated with a pharmacy work and on which a marking can put, such as a prescription holder, a medicine tray, or a prescription, can be employed.

### Kind of Marking and Configuration of Work Area: Third Example

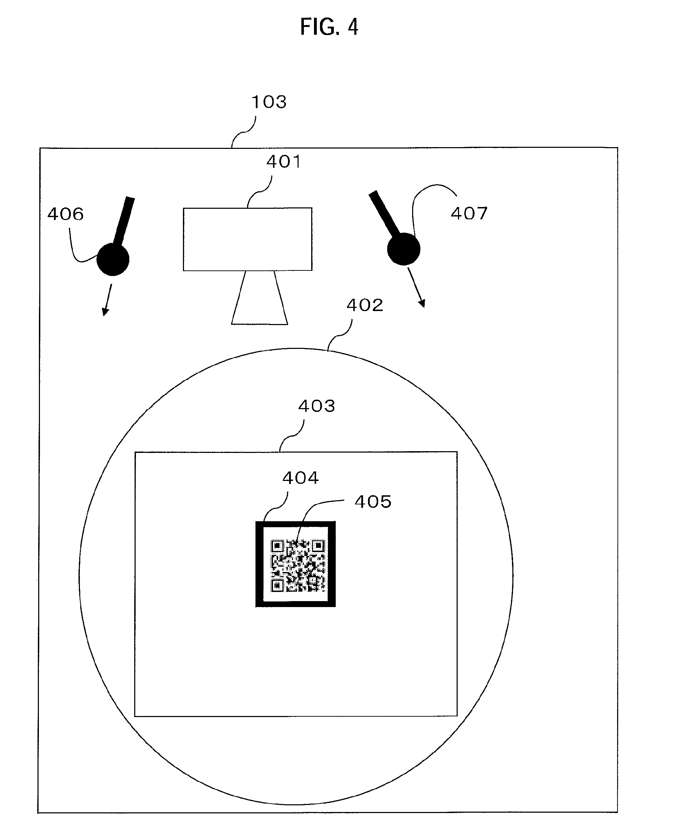

FIG. 4 is a configuration diagram showing a part relating to an image-capture and a sound recording inside the work area 103. This configuration includes a WEB camera 401, an image-capture range 402 of the camera, a work surface 403 of a work bench fastened within the image-capture range, a blue rectangular frame marking 404, a two-dimensional code 405 put within the rectangular frame, and microphones 406 and 407 each having a directivity. The image-capture parameters of the WEB camera 401 are adjusted in accordance with the characteristics of a target work, a position of a work surface, and a brightness, and/or the like, in order to clearly pick up images of a prescription and a medicine, and/or the like, relating to the work. The image-capture range 402 is adjusted within a range that covers the work surface 403 where the work is carried out. The colored rectangular frame marking is a blue geometric pattern which does not generally appear in a pharmacy work and which is put on the center of the work surface. The two-dimensional code 405 is further put on the area within a frame defined by the rectangular frame.

The configuration of the work area 103 is appropriate as a service counter. The two microphones 406 and 407 with respective directivities are directed to a pharmacist and a patient, respectively, and sound is recorded together with an image in a two-track manner. When those are played, a speech of a pharmacist and that of a patient can be clearly recognized. It is effective for a traceability of a pharmacy work.
The microphone for obtaining sound of a pharmacist may employ a scheme in which a headset microphone or a pin-type microphone is fitted to the pharmacist. In this case, such microphone needs no directivity.

The WEB camera is used as the image-capture device, but the image-capture device of the present disclosure is not limited to the WEB camera. Any image-capture device can be used as long as it is a motion/still image-capture device connectable to a network.
Moreover, a configuration is employed in which a colored marking that is a geometric pattern and a two-dimensional bar-code in an area defined by that marking are provided on an object on which such marking is put, but when the amount of information to be recognized by the camera is little or when it is attempted to grasp only the beginning and the end of the work, a square all painted by blue in an appropriate size may be provided on the work surface, and such a colored marking may be recognized.

In the work areas 103 to 105, the WEB camera is fixed to a selected location which does not bother the work and which is appropriate for monitoring the pharmaceutical work. Moreover, the WEB camera has the image-capture parameters adjusted in advance so as to appropriately pick up an image of the work surface in the work area. It is desirable that the WEB camera is placed right above the work surface, but if a configuration is employed which corrects a strain produced based on a relationship between the camera position and the work surface or the marking position in a recognition scheme to be discussed later, the location of the camera is not limited to the right above location of the work surface.
Moreover, the work areas 101 to 103 use different markings, and respective marking recognition schemes also differ. Analysis operations of the analyzing means 104 that recognizes respective markings will be explained below step by step.

### Recognition in accordance with Marking: First Example

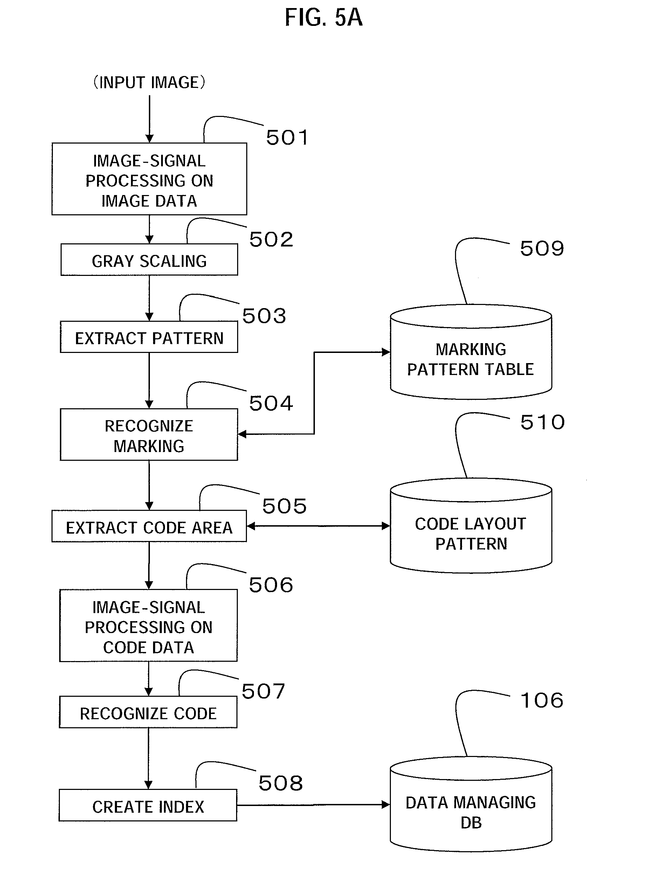

FIG. 5A is a flowchart showing an operation of the image-sound analyzing means 104 to an input image from the work area 101.
An image signal processing is performed on image data that is the image signal from the WEB camera 201 in step 501. The image data processed in this step is temporary stored in a buffer memory (may be present as a logical memory that is not physically present) that is not illustrated in the figure particularly through an operation in the system control center to be discussed later, and is stored in the image-sound storing means 105 in association with an index created in step 508 when a marking is recognized. Alternatively, the image data may be transmitted to the image-sound storing means 105 as it is through the network and may be temporary stored therein. In this case, after an index is created through an operation of the system control center 107, image data having a marking recognized is sorted, and is stored in the image-sound storing means in association with the index.

Step 502 is a gray-scaling step of performing a gray scaling process on the image data. Step 503 is a pattern extracting step of scanning respective brightness values of pixels in the image area having undergone gray scaling, extracting an area where the change level of the brightness value largely exceeds a predetermined threshold change level, and extracting an area where a planar dimension calculated from the number of pixels of the former area exceeds a threshold planar dimension as a stripe marking. Step 504 is a marking recognizing step of comparing a pattern configured by the extracted stripe marking area with a stripe pattern registered in a marking pattern table 509, and of recognizing a predetermined stripe marking.

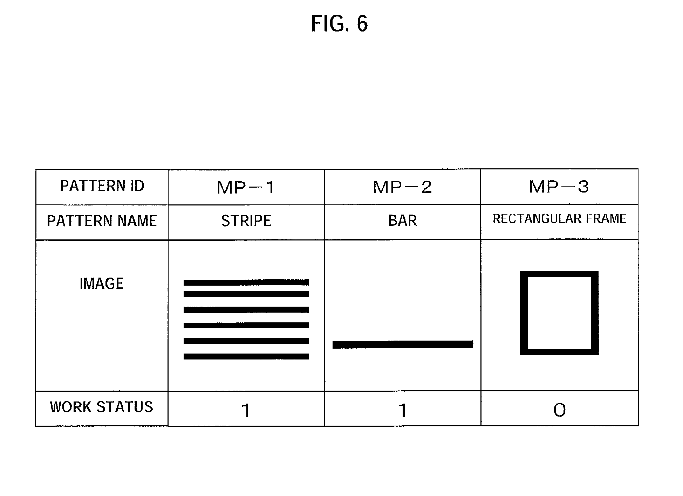

FIG. 6 shows a part of the marking pattern table 509. Two stripe markings having a pattern ID that is "MP-1" are recognized, a label for a work status is "1", and a flag indicating that the work is being in process is set in the index item of the image/sound data. Regarding the label indicated in this example, "1" indicates that the work is in process, and "0" indicates that no work is currently carried out.
In the work area 101 shown in FIG. 2, two stripe patterns are recognized and it is grasped that the work is in process. Moreover, it is possible to grasp that the image having the work status changed from "0" to "1" relates to the beginning of the work and the image having the work status changed from "1" to "0" relates to the end of the work through recognition of image signals successively transmitted. By detecting such status change, a work start time and a work end time can also be recognized.

When the presence of the strip marking is recognized in the recognizing step 504, in a code area extracting step 505, a marking area is extracted. This extraction is performed with reference to a code layout pattern table 510 that registers in advance the positional relationship of a code put together with the marking and the size as a pattern.

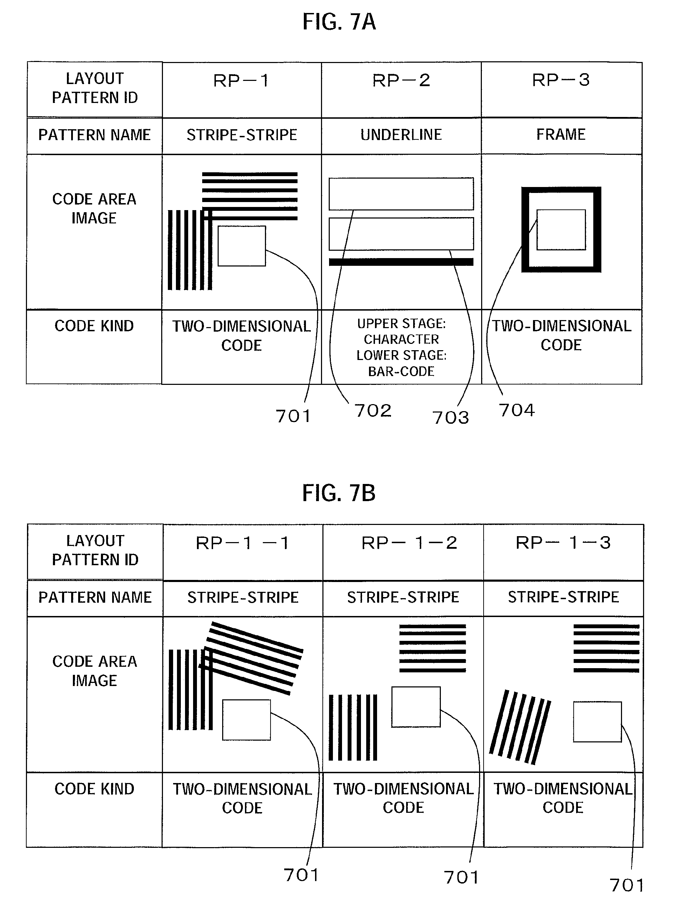

FIG. 7A shows a part of the internal configuration of the code layout pattern table 509.
A layout pattern that is "stripe-stripe" having a code layout pattern ID which is "RP-1" is recognized, and a code area of the two-dimensional bar-code provided near an area where two stripe markings overlap is indicated. That is, the marking area is a solid part 701 surrounded by a rectangular frame in a code area image item.
Since the camera position and the work position are set in advance, the largeness of a size and a deformation set based on a positional relationship between the camera and the image-capture range are corrected, and compared with an image with a standard size shown in the pattern table, thereby improving the recognition precision.

FIG. 7B is a diagram showing a modified example of a code area. As shown in the figure, when, for example, the layout pattern ID is "RP-1-1", an image (a pattern name) is stripe-stripe, and the code area is described in such a way that two stripe markings overlap and intersect with each other at an arbitrary angle. A two-dimensional code is put together on a straight line interconnecting a plurality of intersections where the two stripe markings intersect with each other. Moreover, when the layout pattern ID is "RP-1-2", an image (a pattern name) is stripe-stripe, and the code area is also indicated that two stripe markings intersect at right angle but do not overlap with each other. A two-dimensional code is disposed on a straight line interconnecting a plurality of intersections on the extended lines of the two stripe markings. Furthermore, when the layout pattern ID is "RP-1-3", an image (a pattern name) is stripe-stripe, and the code area is also indicated that two stripe markings intersect at an arbitrary angle but do not overlap with each other. A two-dimensional code is also put on a straight line interconnecting a plurality of intersections on the extended lines of the two stripe markings.
The two dimensional code is also put on an extended line interconnecting intersections where two stripe markings larger in size than the bar-code area (the two-dimensional code) and expressed as distinguishing shapes intersect with each other. The two stripe markings are detected by the camera, and an image analysis is performed on only the detected area, thereby precisely reading information expressed by the two-dimensional code at a fast speed.

Step 506 is an image processing step of processing an image signal of the area defined as the code area in order to generate two-dimensional code data. In step 507, the two-dimensional bar-code put together with the marking is recognized, and coded information is read. Step 508 is an index creating step of creating an index using the read information.

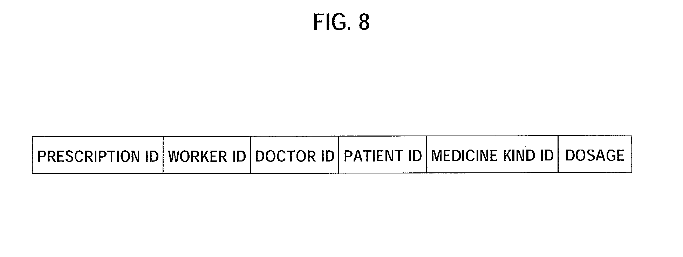

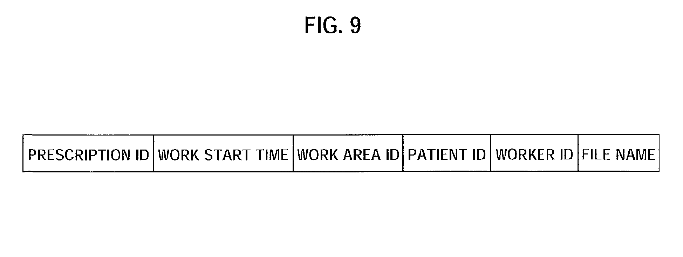

FIG. 8 shows data items of information written in the two-dimensional bar-code. FIG. 9 shows data items configuring an index. The data items shown in the figure are example items of the present disclosure, and data items relating to a pharmacy work can be used as a two-dimensional bar-code or data configuring an index.

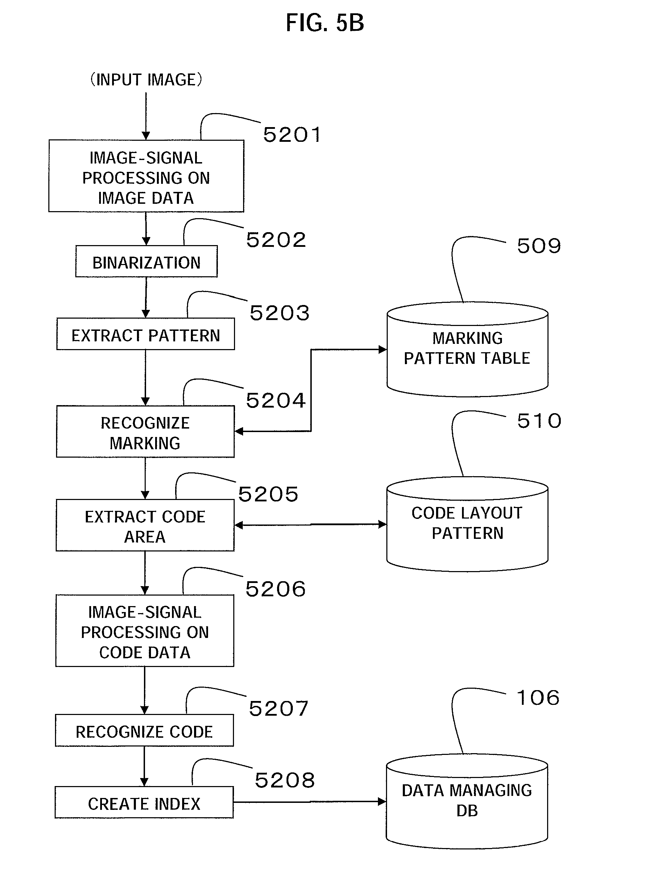

In the above-explained flow, a scheme to which the gray scaling process is applied in the pre-processing procedure of the image signal from the WEB camera is explained, but a scheme of performing a binarization process can be applied. FIG. 5B is a flowchart when a binarization process is applied as a preprocessing.
The flow in this case will be explained.

In step 5201, first, an image signal processing is performed on image data.
Step 5202 is a binarization step of performing a binarization by detecting black pixels from the image data. Step 5203 is a pattern extracting step of extracting a bar pattern configuring a stripe based on the distribution of the black pixels detected through the binarization. Step 5204 is a marking recognizing step of comparing a pattern formed by the extracted bar with a stripe pattern registered in the marking pattern table 509, and of recognizing a predetermined stripe marking.

When the presence of the stripe marking is recognized in the recognizing step 5204, in a code area extracting step 5205, a marking area is extracted. This extraction is performed with reference to the code layout pattern table 510 that registers in advance the positional relationship of a code put together with the marking and the size as a pattern.

Step 5206 is an image processing step of processing an image signal of the area defined as the code area in order to generate two-dimensional code data. In step 5207, the two-dimensional bar-code put together with the marking is recognized, and coded information is read. Step 5208 is an index creating step of creating an index using the read information.

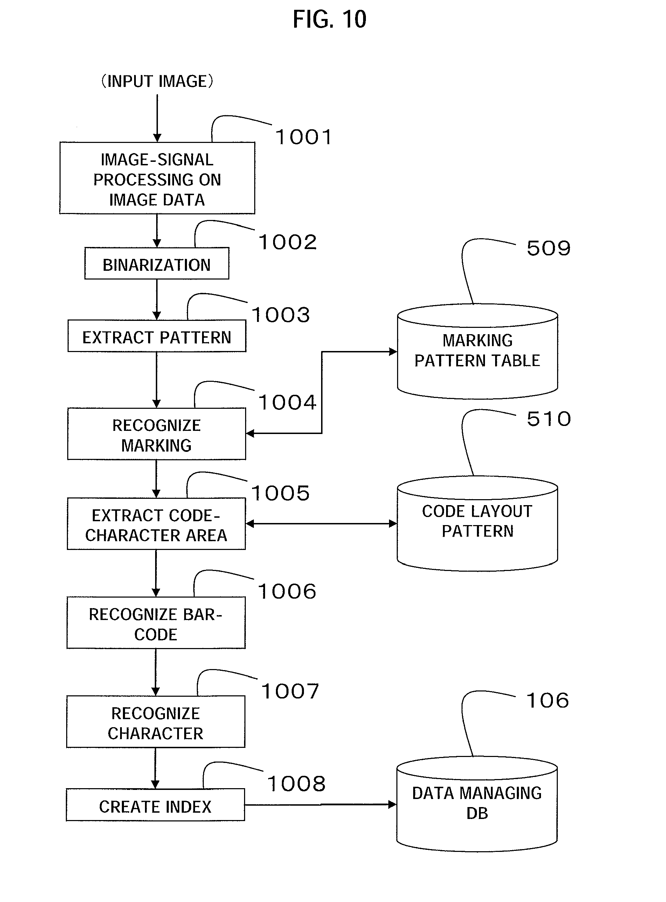

Recognition in accordance with Kind of Marking Put Together with Character, Bar-code and Straight Line: Second Example
FIG. 10 is a flowchart showing an operation of the image-sound analyzing means 104 to the input image from the work area 102.
An image signal processing is performed on image data that is the image signal from the WEB camera in step 1001. Step 1002 is a binarization step of performing a binarization by detecting black pixels from the image data. Step 1003 is a pattern extracting step of extracting a bar based on the distribution of the black pixels detected through the binarization.

Since the bar which is the extraction target is indicated at a predetermined location of the work instruction, if the place where the instruction is placed on the work surface 303 provided on the work bench, and/or the like, is set beforehand, the image area to be scanned in order to recognize a marking can be limited to a specific area. It is remarkably effective to improve the the precision of the marking recognition and to speed up of the recognition. Moreover, if a guide like a painted marking is provided so that a worker can correctly put the instruction on the set place, further precise and fast-speed marking recognition can be realized.

Step 1004 is a marking recognizing step of comparing a pattern formed by the extracted bar with a pattern registered in the marking pattern table 509, and of recognizing the bar 306 put on the work instruction 305.
FIG. 6 shows a part of the marking pattern table 509. A bar having a pattern ID that is "MP-2" is recognized and it is grasped that the work status is "1".
It is grasped in the work area 102 shown in FIG. 3 that the work is in progress.

When the presence of the bar is recognized in the recognizing step 1004, in a code area extracting step 1005, a marking area is extracted. This extraction is performed with reference to the code layout pattern table 510 that registers in advance the positional relationship of a code put together with the marking and the size as a pattern.

A layout pattern that is an "underline" having a code layout pattern ID of "RP-2" is recognized with reference to the code layout pattern table 509 shown in FIGS. 7A and 7B, and the bar-code area and the character area arranged in parallel with the bar are estimated. That is, those are areas surrounded by rectangular frames in the code area image item and denoted by reference numerals 702 and 703.
The thickness of the bar in the image, the length thereof, and/or the like, are converted into pixels, and a positional relationship between the code area and the character area and respective sizes of such areas are calculated, and an image signal of the area matching the calculated position and size is extracted as a scanning target.

Step 1006 is a bar-code recognizing step of processing bar-code data that is an image signal of the area defined as the bar-code area. Step 1007 is an OCR (Optical Character Reader) recognizing step of performing an OCR process on characters that are image signals of the area defined as the character area.

In an index creating step 1008, an index is created using information read from the recognized bar-code and the characters.

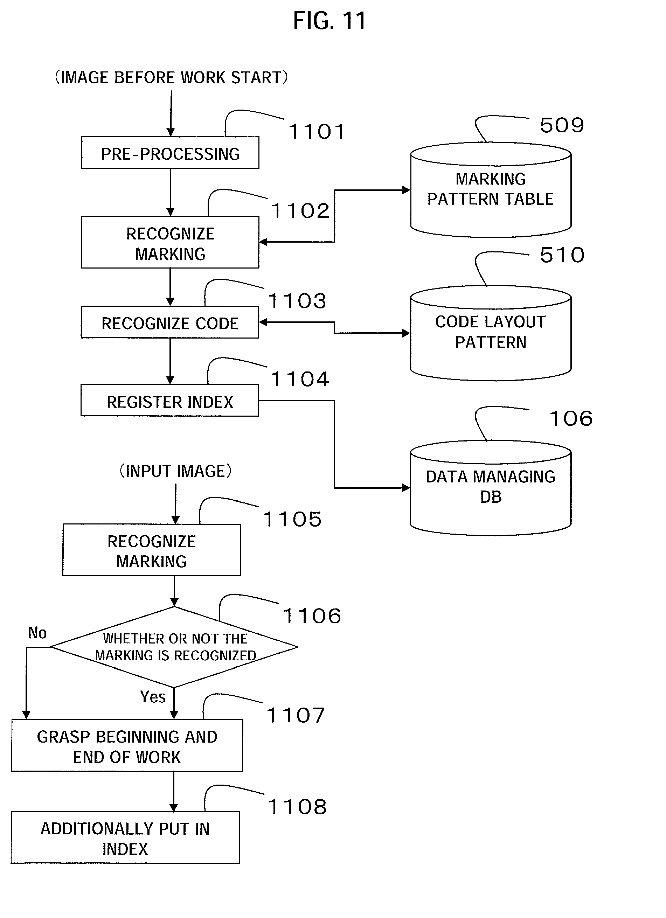

Recognition in accordance with Kind of Marking Put Together with Blue Rectangular Frame and Two-dimensional Bar-code: Third Example
FIG. 11 is a flowchart relating to a processing of an image signal from the WEB camera to an input image from the work area 103. The marking is provided at the center of the work surface, and is shaded by a worker or an object that is a target of the work, so that no marking appears in an image while the work is being carried out.
The marking is provided at the center of the work surface but can be provided at any area as long as it is hidden during the work in the image-capture range.

In step 1101, first, a pre-processing is performed on the image signal before the beginning of the work. In the pre-processing step 1101, a binarization process of performing a binarization by detecting black pixels and a pattern extracting process of extracting a bar based on the distribution of the black pixels detected through the binarization are performed.

Step 1102 is a marking recognizing step of comparing a pattern formed by the extracted bar with a pattern registered in the marking pattern table 509, and of recognizing the rectangular frame 404 put on the center of the work surface.
A rectangular frame having a pattern ID that is "MP-3" is recognized and the work status that is "0" is grasped. "0" is a label indicating that no work is carried out in the work area.

When the presence of the rectangular frame marking is recognized in the recognizing step 1102, in step 1103, a code area extracting process is performed with reference to the code layout pattern table 510, and a recognizing process of the extracted code area is performed.

A layout pattern that is a "frame" having a code layout pattern ID of "RP-3" is recognized with reference to the code layout pattern table 509 shown in FIGS. 7A and 7B, and a two-dimensional bar-code area is estimated within the frame. That is, the marking area is an area surrounded by the rectangular frame in the "code area image" item and denoted by a reference numeral 704.

The code recognizing process is a two-dimensional bar-code recognition of processing two-dimensional bar-code data that is an image signal of the area defined by the two-dimensional bar-code area.

In an index registering step 1104, an index shown in FIG. 9 is created using information read from the recognized two-dimensional bar-code. Regarding the index at this stage, information on a file indicated by the index and a work start time are empty, and only settled information like a work area ID are filled.
The structure of the index created in this embodiment is not limited to the structure shown in FIG. 9, and any structure can be employed as long as it can be utilized for managing a work flow, and/or the like.

The flow from step 1105 to step 1108 is a flow for a work monitoring in the work area 103 after the index is registered. The step 1105 is a marking checking step of checking whether or not a predetermined marking can be recognized from an input image from the camera that captures images at a predetermined cycle.

In a marking recognizing process of step 1107, a determination process is performed which performs the above-explained process and gives a "Yes" determination when the presence of the marking is recognized or gives a "No" determination when it is not recognized. 1109 is a process performed when the determination changes from successive "Yes" to "No" or from successive "No" to "Yes".
A correction process of not determining such a change by what corresponds to a predetermined number of frames may be performed in consideration of a false recognition of an image.
In step 1107, the beginning and the end of the work are grasped and in an index editing step of step 1108, an image-capture start time is detected from the grasped beginning of the work, and is edited in the index.

### Recognition of Work through Colored Marking

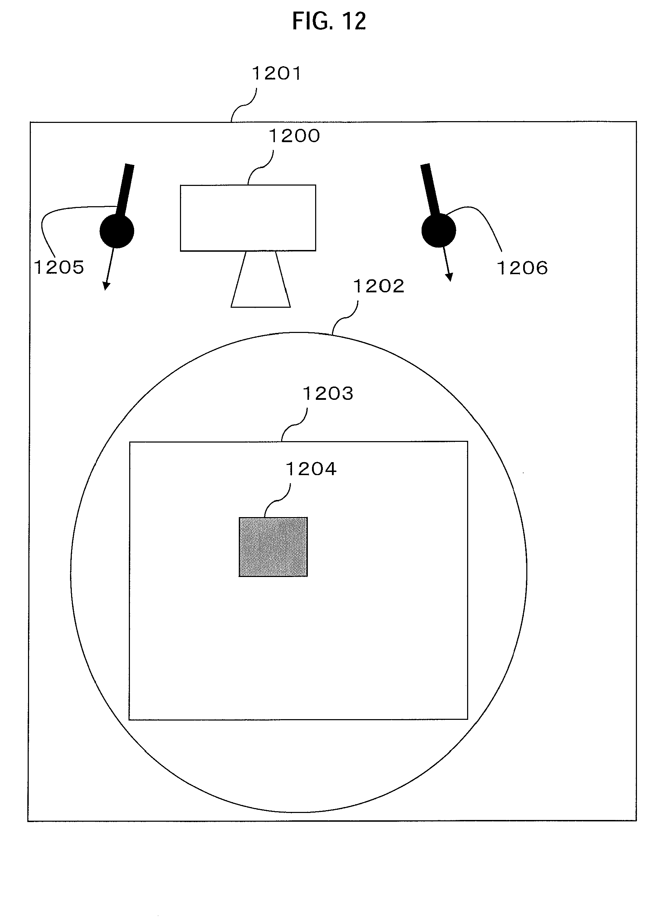

FIG. 12 shows a configuration of a work area 1201 which is different from the above-explained configurations and schemes but is applicable to the present disclosure. The configuration includes a WEB camera 1200, a camera image-capture range 1202, a work surface 1203 of a work bench fastened within the image-capture range, a rectangular colored marking 1204, and microphones 1205 and 1206 each having a directivity. The rectangular colored marking 1204 is painted with a fluorescent orange color that does not appear in a normal pharmacy work. The fluorescent orange color area in the image-capture area is normally an area occupied by the marking.

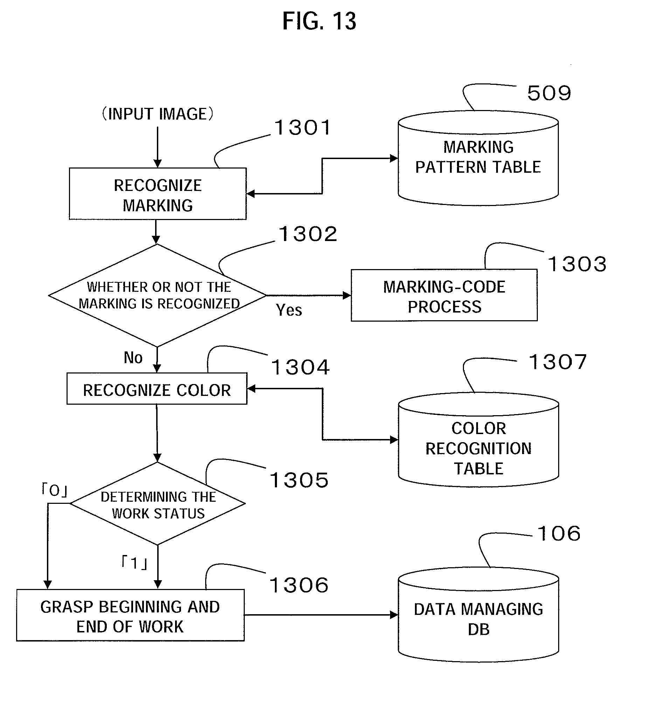

FIG. 13 is a flowchart relating to an operation of the image-sound analyzing means 104 to an image signal from the WEB camera in the work area 1201. The marking in this example is provided at the center of the work surface, and does not appear in an image since it is shaded by a worker or an object that is a target of the work while the work is being carried out.
The marking is provided at the center of the work surface, but can be put on any area as long as it is hidden during the work in the image-capture range.

In step 1301, first, a marking recognizing process is performed. At a branch 1302 of the operation flow, when a marking is recognized (Yes), the process progresses to a marking-code process 1303. Regarding how to recognize a marking and a code, the above-explained scheme can be applied in accordance with the kind of the marking and that of the code. When no marking is recognized (No), the process transitions to a color recognizing step 1304.

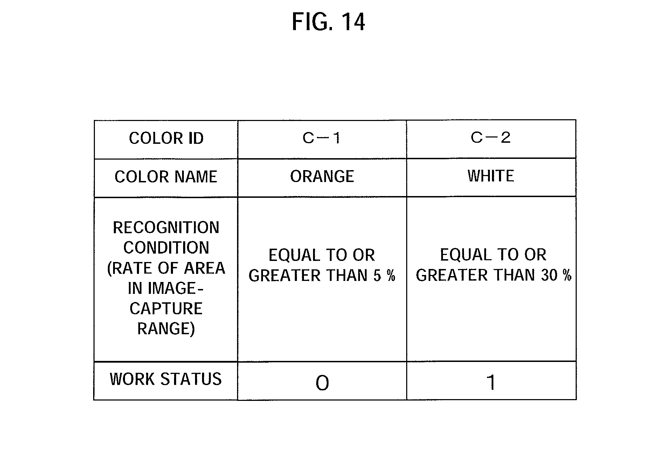

In the color recognizing step 1304, pixels are analyzed from image data, a pixel within a color range of RGB set for each color that is a determination target is detected, and the ratio of the color area relative to the image-capture range is calculated as a ratio of the number of pixels determined as a target color relative to the whole number of pixels in the image-capture range in order to perform a color recognition. FIG. 14 is a color recognition table referred in this color recognition, and if the fluorescent orange color marking 1204 is the captured image, since the colored range occupies equal to or larger than 5 %, a recognition condition for a color ID "C-1" is set to be equal to or larger than 5 %, and when a condition is satisfied in comparison with a calculation result, a label "0" indicating the work status is added to the image.
The color range is between an upper limit and a lower limit of a colored space in an inspected image relative to each dimension. In general, a colored space can be expressed by RGB that are red, green and blue, and this scheme is employed in the present embodiment, but the scheme of the color recognition applicable to the present disclosure is not limited to this scheme.

Step 1305 is a determining step of checking the work status based on the label added to the image for each image sequentially captured. Step 1306 is a grasping process of the beginning and end of the work based on a change of the determination from successive "1" to "0" or from successive "0" to "1". The beginning and end of the work grasped are recorded in the data managing means in association with corresponding image data or an image-capture time.

### Recognition of White Area

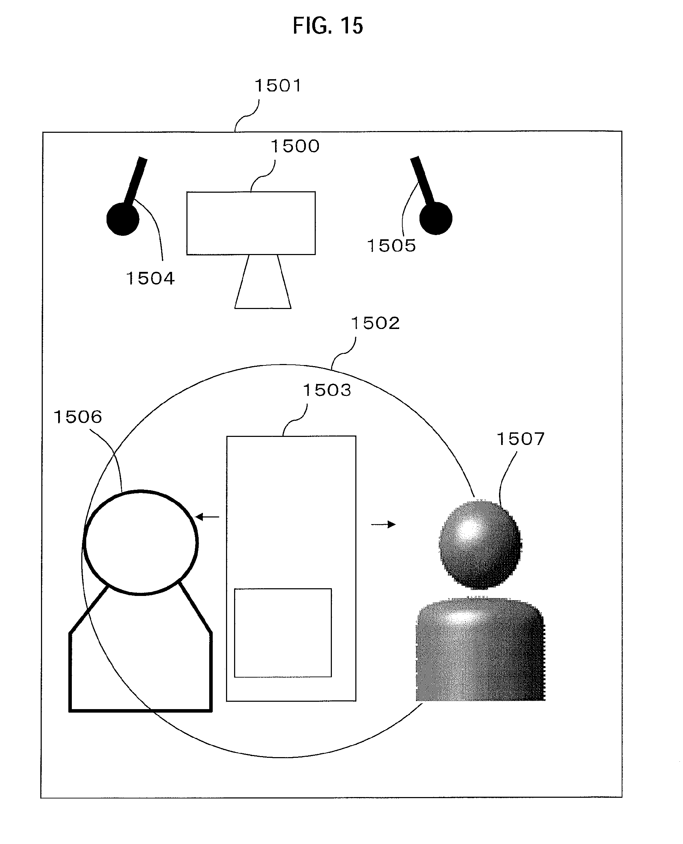

According to the color recognition scheme applied to the work area 1201, the work can be grasped by recognizing a colored area increasing especially during the pharmacy work without any setting of a colored marking like the blue marking 1204. A configuration of the work area 1501 shown in FIG. 15 includes a WEB camera 1500, a camera image-capture range 1502, a counter (a work surface of a work bench) 1503 fastened within the image-capture range, microphones 1504 and 1505, a pharmacist (a worker) 1506, and a patient 1507.

The large part of the pharmacist 1506 is a white area when the pharmacist wears a typical clothing, and the large part of a prescription put on the work surface and that of a work instruction, and/or the like, are also white areas. When the pharmacist shown in FIG. 15 stands up at the counter, in general, equal to or greater than 30 % of the image-capture range become white areas. When the color recognition table shown in FIG. 14 is referred in this case, a color ID "C-2" is recognized and a condition that the colored area is equal to or greater than 30 % is registered.
By causing the image-sound analyzing means 104 to perform a recognition using the color recognition table, it is possible to grasp the work without any setting of a special marking by performing a color recognition for a white color "C-2" on the beginning of the work in the work area shown in FIG. 15.
By grasping the position of the white area, it is possible to grasp that sound captured by the microphone with a directivity directed to the white area is sound from the pharmacist.

### Recognition of Marking Put on Back of Hand and Sleeve

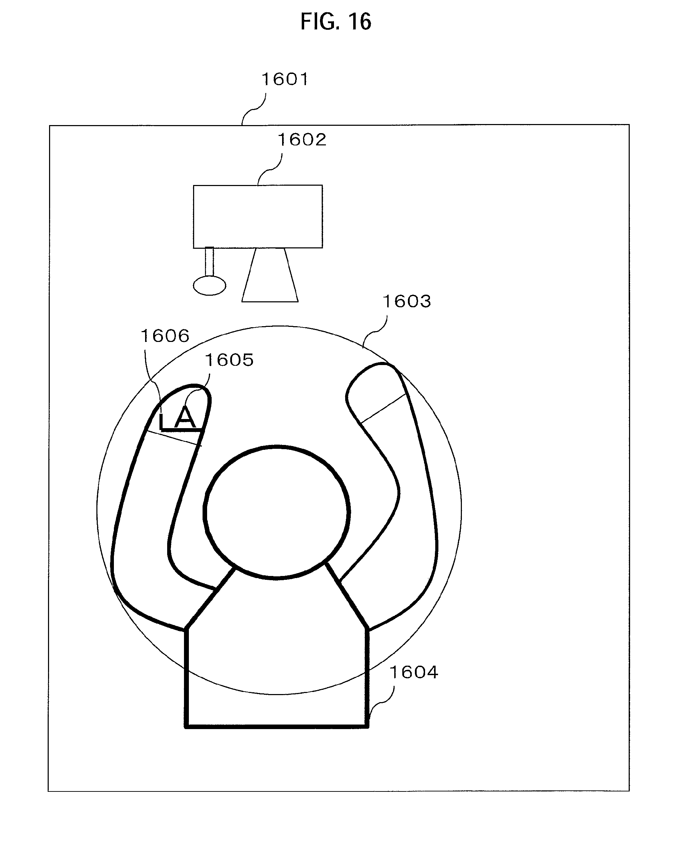

FIG. 16 shows a configuration of a work area 1601 which is different from the above-explained configurations and schemes but schemes but is applicable to the present disclosure. This configuration includes a WEB camera 1602 built with a microphone, an image-capture-and-sound-pickup range 1603, a worker 1604, a character marking 1605 put on the back of the worker's hand, and a marking 1606. The character marking 1605 and the marking 1606 can be put on a sleeve or a shoulder which can be shot by the WEB camera, but in consideration of the characteristics of the work, those markings are set at positions which do not frequently disappear from the image-capture range.

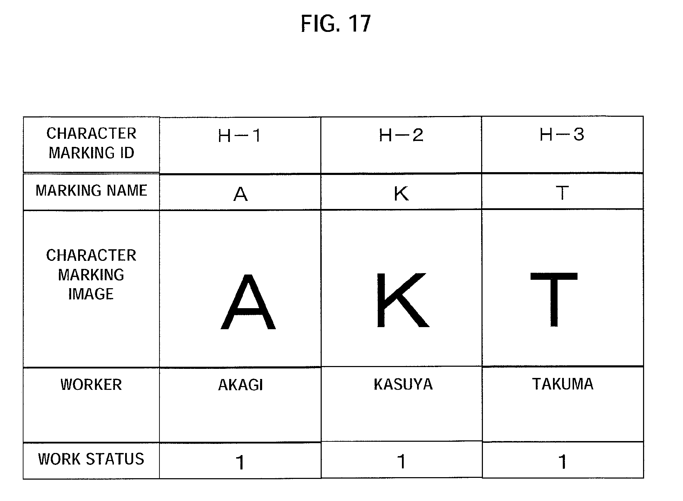

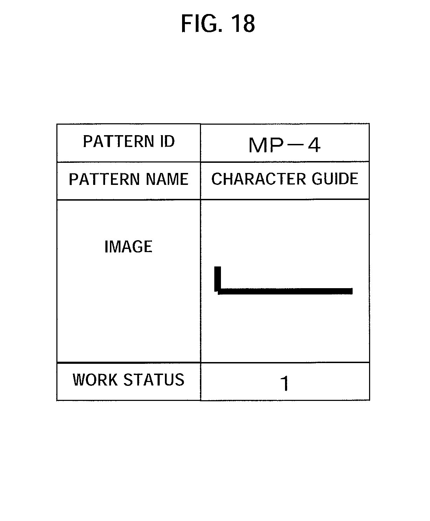

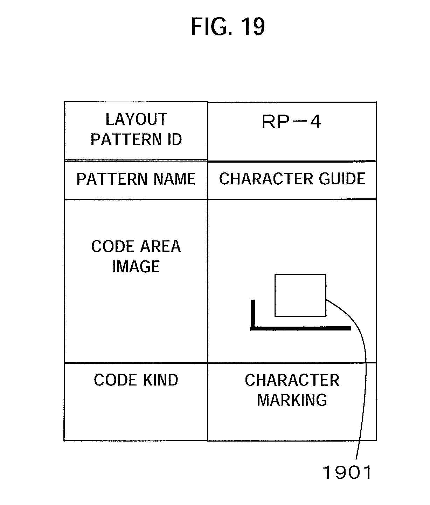

FIG. 17 shows a part of a marking pattern table relating to the character marking put on a bodily portion of the worker. FIG. 18 shows a part of a character marking table relating to the marking 1606. FIG. 19 shows a part relating to the marking 1606 in a code layout pattern table.

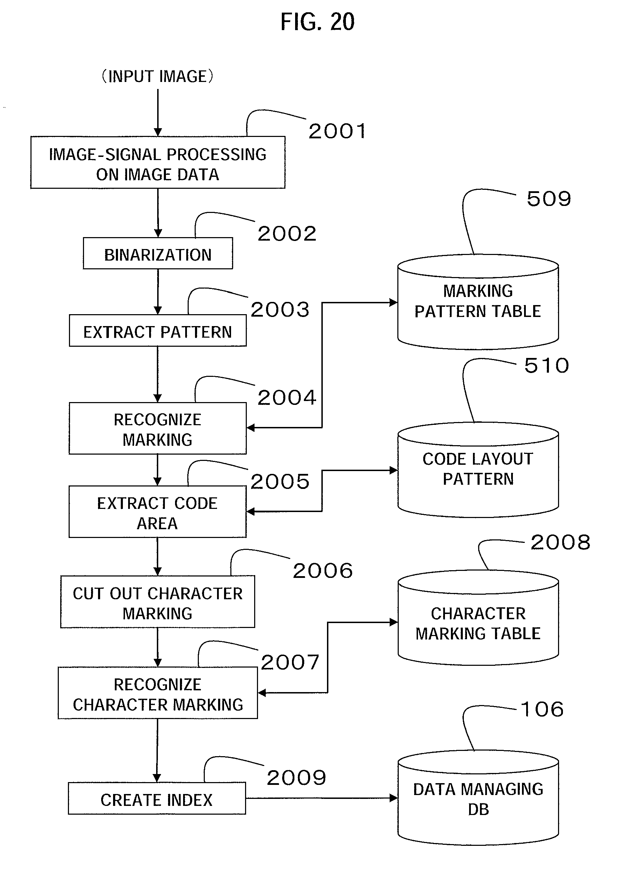

An operation of the image-sound analyzing means 104 to an image signal from the work area 1601 will be explained. FIG. 20 is a flowchart of an image analyzing operation thereof.
An image signal processing is performed on image data that is an image signal from the WEB camera in step 2001. The image data processed in this step is temporary stored in a buffer memory that is not particularly illustrated through an operation by the system control center to be discussed later, a marking is recognized, and is stored in the image-sound storing means 105 in association with an index created in step 2009. Alternatively, the image data may be directly transmitted to the image-sound storing means as it is through the network, and may be temporary stored therein. In this case, also, after an index is created, image data having undergone marking recognition is sorted and stored in the image-sound storing means in association with the index through the operation by the system control center 107.

Step 2002 is a binarization step of performing a binarization by detecting black pixels from image data. Step 2003 is a pattern extracting step of extracting a pattern configuring a marking based on the distribution of the black pixels detected through the binarization. Step 2004 is a marking recognizing step of comparing the pattern formed by an extracted bar with a pattern registered in the marking pattern table 509, and of recognizing a marking.

FIG. 18 shows a part of the marking pattern table 509 relating to a recognition of the marking 1606. A "character guide" having a pattern ID that is "MP-4" is recognized and the work status that is "1" is grasped.

When the presence of the "character guide" is recognized in the marking recognizing step 2004, in a code area extracting step 2005, a character marking area is extracted. This extraction is performed with reference to the code layout pattern table 510 that registers in advance a character marking put together with the marking, the positional relationship thereof with a code and the size as a pattern. FIG. 19 shows a table portion relating to the "character guide".

A layout pattern that is a "character guide" having a code layout pattern ID of "RP-4" is recognized, and a character marking area 1901, a vertical direction of the character that is a shorter direction of a bar, and a horizontal direction that is a longer direction of the bar are recognized.

Step 2006 is a character-marking cutting step of performing a process of cutting out the character marking from the binarized black pixels of the area defined as the character marking area. In step 2007, the cut character marking is recognized with reference to a character marking table 2008. Since the vertical and horizontal directions of the character marking can be detected based on the "character guide", the precision of the recognition can be improved.

A character marking ID "H-1" is recognized in this example, and information that is a worker ID of "AKAGI" is read. Moreover, the label of the work status that is "1" indicating that the work is in progress is also confirmed. Those pieces of information can be used as items of an index as needed. Step 2008 is an index creating step of creating an index using the read information.

The image-capture parameters of the WEB camera 1601 are adjusted in accordance with the characteristics of a target work and a work place, and/or the like, in order to clearly pick up images of a prescription relating to the work, a medicine, and the back of the worker's hand when it is put on the work bench. Moreover, since binarization for a contrasting density of an image using a threshold is largely affected by a change in the lighting intensity, if an illumination is finely adjusted, a further highly precise recognition result can be obtained.

### Recognition of Motion of Hand

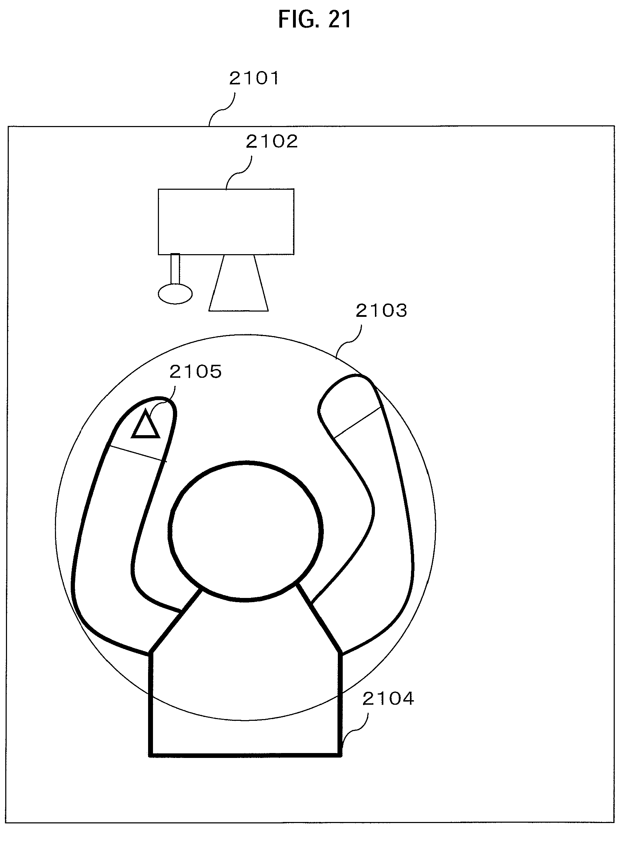

FIG. 21 shows a configuration of a work area 2101 which is different from the above-explained configurations and schemes but is applicable to the present disclosure. This configuration includes a WEB camera 2102 built with a microphone, an image-capture-and-sound-pickup range 2103, a worker 2104, and a marking 2105 fixed on the hand of the worker. It is desirable that the marking 2105 should be put on the back of the worker's hand in a hidden manner so that it can be shot by the WEB camera 2102 only when the worker gives a predetermined sign. Alternatively, the marking 2105 may be a marking indicator which is taken out only when the worker gives a sign to the WEB camera 2102.

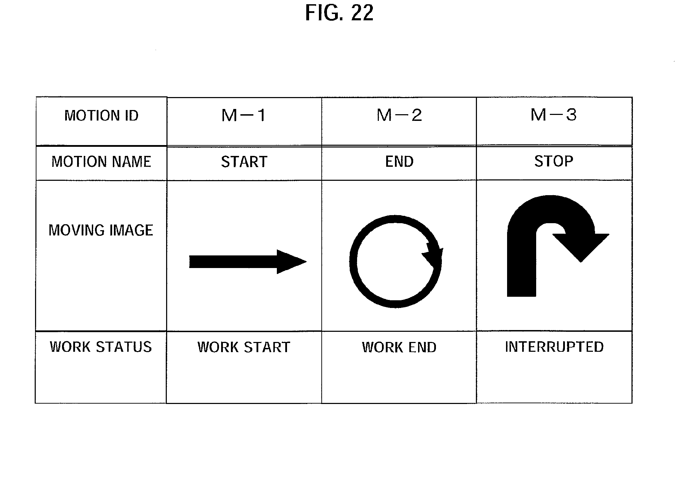

FIG. 22 is a motion pattern table referred in order to cut out images of a marking portion successively captured when the worker carries out a predetermined action (a motion) like waving the worker's hand, and to recognize a motion pattern formed by marking areas moving in chronological order.
For example, when the worker 2104 linearly waves the worker's hand where the marking is fixed and/or the like toward the WEB camera 2102, the image-sound analyzing means 104 refers to the motion pattern recognition table in accordance with a predetermined recognition operation, and recognizes the start of a motion ID that is "M-1". The work status that is "the beginning of the work" is grasped at this time.
Likewise, when the hand on which the marking is fixed is rotated toward the camera, the stop of "M-2" is recognized and the work status that is the "end of the work" is grasped at this time, thereby performing an image analysis.
The start time of the work, and/or the like, relating to the recognized work status may be used as an item of an index, and is used for creating an index of image-sound data together with the work area ID of the work area 2101.

The motion recognizing scheme of the present disclosure is not limited to a motion recognition based on a comparison with a moving image, shown in the embodiment, set and prepared in advance, and conventionally well-known motion recognition techniques can be applied to the present disclosure as a configuration thereof as needed.

### Recognition of Beginning and End of Work through Infrared Camera

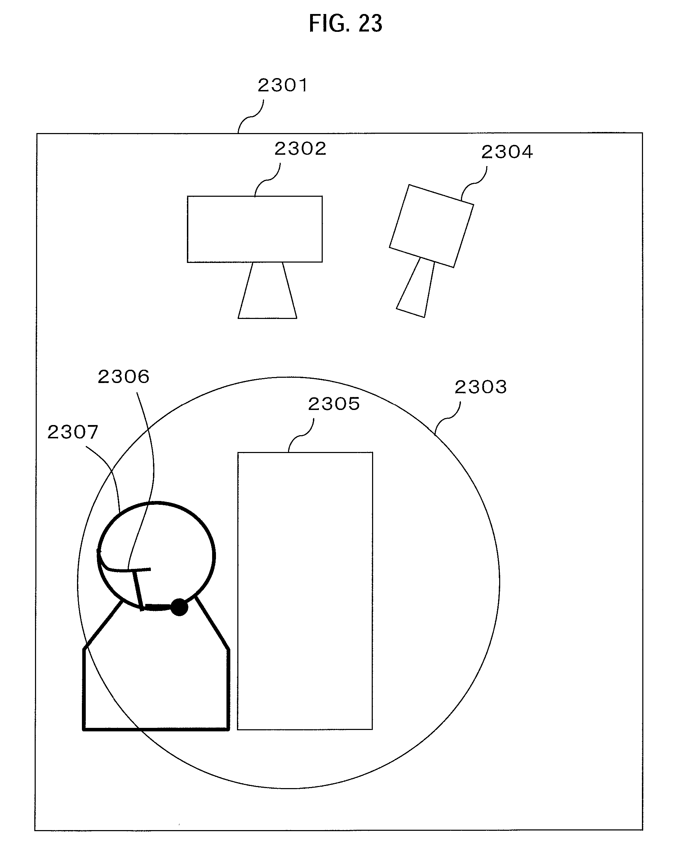

FIG. 23 shows a configuration of a work area 2301 which is different from the above-explained configurations and schemes but is applicable to the system of the present disclosure. This configuration includes a WEB camera 2302, an image-capture range 2303 adjusted so as to cover a work surface 2305 of a desk, and/or the like, placed in the work area 2301, an infrared camera 2304 having image-capture parameters set for this image-capture range, a microphone 2306 attached to a worker, and a worker 2307. A thermal image obtained by the infrared camera 2304 includes information on a work area ID and an image-capture time added thereto, is transmitted to the image-sound analyzing means through the network, and is subjected to a recognition in accordance with an operation of a program that executes a flow to be discussed later.
The thermal image is used for recognizing the presence of the worker, so that a scheme of setting a work place of the worker not as the work surface itself and of adjusting the image-capture parameters of the infrared camera so as to cover the range of the set work place can be applied to the present disclosure.

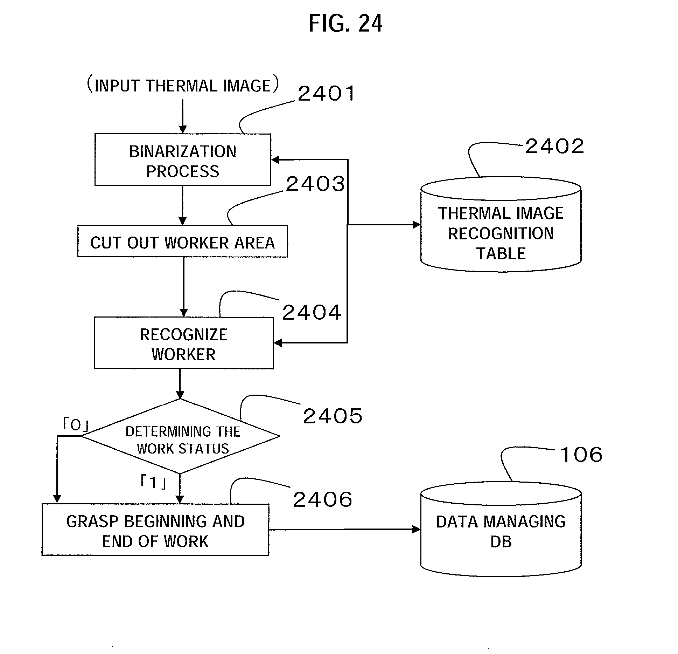

FIG. 24 is a flowchart of an operation of the image-sound analyzing means 104 to a thermal image signal from the infrared camera 2304 in the work area 2301.

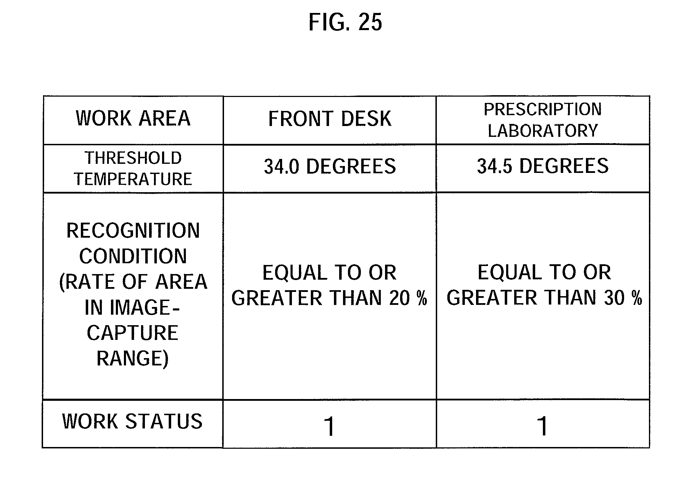

In step 2401, first, a thermal image is binarized. This binarization is performed based on a determination on whether or not a temperature exceeds a threshold temperature for each pixel. The threshold temperature used is registered in a thermal image recognition table 2402. FIG. 25 shows a part of the configuration of the thermal image recognition table. A threshold temperature and a ratio of a thermal image area relative to the whole image are registered for each work area, and the work status label when the worker is recognized is set to be "1". The thermal image is not illustrated in the figure but the label of the thermal image data when no worker is recognized is set to be "0".

In a worker area cutting step 2403, a worker area is cut out. A cut target is a pixel area which is binarized and which is determined that the temperature exceeds the threshold temperature.

In a worker recognizing step 2404, a ratio of the area cut in the previous step relative to the image-capture range is calculated as the ratio of the number of pixels in the cut area relative to the number of whole pixels in the image-capture range, and is compared with a ratio of a recognition condition registered in the thermal image recognition table 2402. When the condition is satisfied, the presence of the worker is recognized.

Step 2405 is a determining step of reading a label added for each thermal image successively captured, and of checking the work status. Step 2506 is a process of grasping the beginning of the work and the end thereof based on a change in the determination from successive "1" to "0" or from successive "0" to "1". The grasped beginning of the work and the end thereof are recorded in the data managing means 106 in association with the file of the corresponding image-sound data, the image-capture time, and the work area ID.

### Recognition of Beginning and End of Work with Sound being as Trigger

A technology of grasping the work through a method of analyzing an image signal is explained so far, but how to grasp the work according to the present disclosure is not limited to the above-explained technology. A method of analyzing a sound signal recorded in a work area in order to grasp the work, and of controlling the system can also be applied.

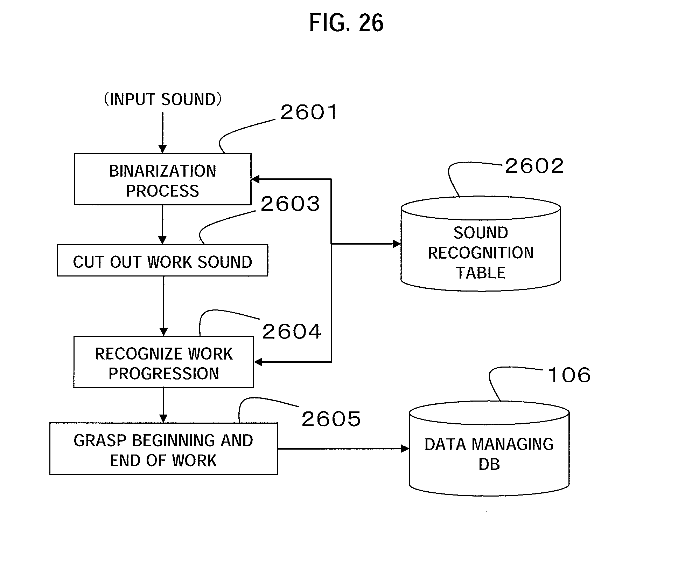

FIG. 26 is a flowchart of an operation of the image-sound analyzing means 104 to a sound signal from a microphone provided in a work area.

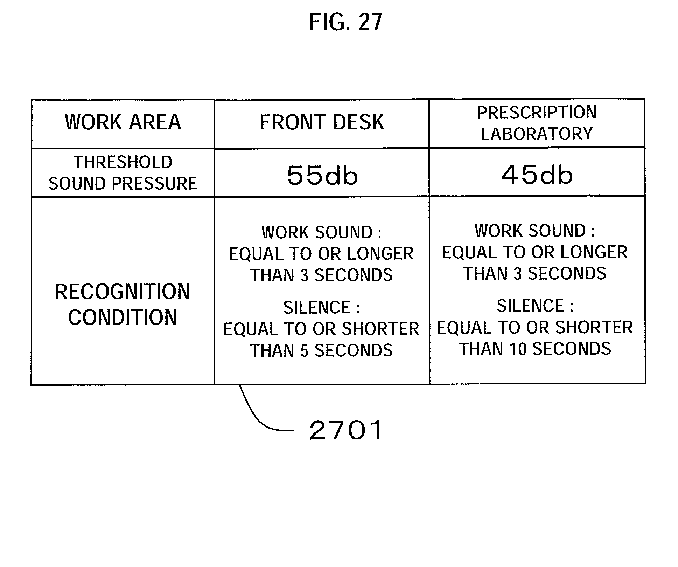

In step 2601, first, a sound signal is binarized. This binarization is performed based on a determination on whether or not there is work sound with a sound signal exceeding a threshold sound pressure being as the work sound. The cycle of analyzing sound is for each one second, but can be set in accordance with the characteristics of the work. The threshold sound pressure is determined based on a reference that is a threshold sound pressure value registered in a sound recognition table 2602. FIG. 27 shows a part of the configuration of the sound recognition table. A threshold sound pressure and a recognition condition of the progress of the work are registered for each work area.

In a work-sound cutting step 2603, a sound signal recording time with work sound is cut out. The cut target is a recording time with a sound signal which is binarized and which exceeds the threshold sound pressure.

In a work progression recognizing step 2604, an interval at which the distribution of the recording times cut in the previous step satisfies a condition registered in the sound recognition table is extracted, and the beginning of the interval and the end thereof are recognized as the work start time and the work end time, respectively, in step 2604.
In the case of a recognition with a recognition condition 2701 when the work area is a "front desk", if the continuation of the work sound for equal to or greater than three seconds is detected at first, the start time of the work sound is grasped as the work start time, and if silence continues for equal to or greater than five seconds, the start time of the silence is grasped as the work end time.

The grasped work start time and work end time are recorded in the data managing means 106 in association with the file of the corresponding image-sound data, a work area ID, and a work ID, and/or the like.

### Recording Operation of Image and Sound Data by System Control Center

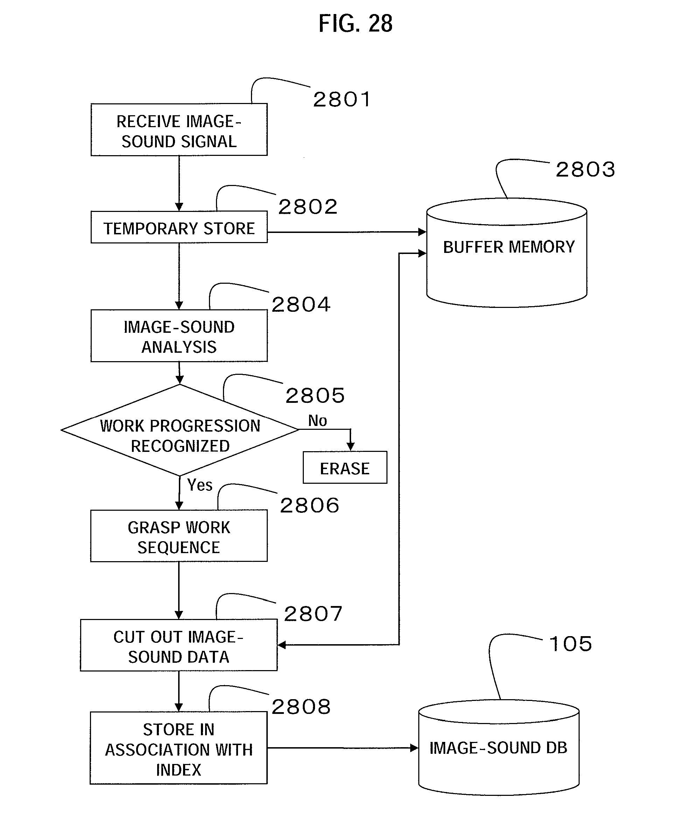

FIG. 28 is a flowchart showing a recording operation of image and sound data by the system control center 107.
In an image-sound signal receiving step 2801, an image signal and a sound signal from the WEB camera and the microphone provided in a work area are received together with an image-capture time and a work area ID added to those signals. In a temporary storing step 2802, those signals and pieces of index information are temporary stored in a buffer memory 2803. The buffer memory is physically provided in the system control center. The buffer memory of the present disclosure is not limited to this configuration, and may be logically secured in an area of the image-sound storing means 105.

In an image-sound analyzing step 2804, the image-sound analyzing means 104 is controlled to analyze an image-sound signal. This analysis operation includes plural kinds of flows in accordance with the configuration of the work area, and the details thereof are already explained.
In a determining step 2805, image data subjected to the analysis operation of the image-sound analyzing means is monitored at a predetermined cycle, and a determination is executed based on whether or not a flag or a label indicating that the work is in progress is detected. When no flag indicating that the work is in progress is detected, the data is not taken as a recording target, left as it is, and erased together with an update of the memory.
The recording target is erased in this example, but the scheme of the present disclosure is not limited to this example. A scheme of storing all pieces of data relating to an image-capture and sound-pickup in a predetermined memory device and of analyzing those pieces of data can be applied as needed.

In a work sequence grasping step 2806, image-capture times associated with image-sound data relating to the beginning of the work and the end thereof grasped by the analysis operation by the image-sound analyzing means 104 are read from the data, thereby grasping an interval of image-sound data relating to a work progression sequence.

In an image-sound data cutting step 2807, the image-sound data in the interval grasped in the step 2806 is cut out, and a data file relating to a work sequence is created. Next, in step 2808, the image-sound data file relating to the work sequence is stored in the image-sound storing means 105. At this time, predetermined information, such as an image-capture start time, a work area ID, and a camera ID, readable from the received image-sound signal are added as index items to an index created for the data file relating to the work sequence, and the index is associated with the data file.

### Configuration of Image-sound Storing Means

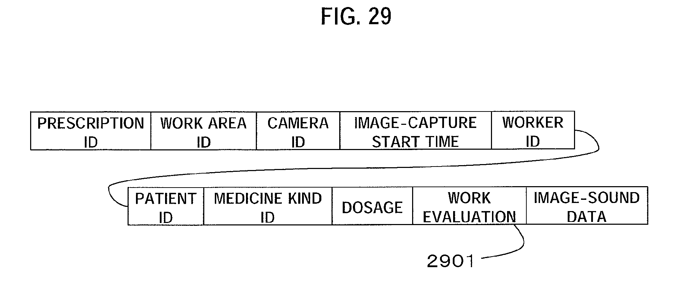

FIG. 29 shows a structure of stored data in the image-sound storing means 105 that stores data files relating to the work sequence.
For example, when a marking indicating object on which a stripe marking and a two-dimensional bar-code are put together moves from a work area 1 to a work area 2, the stripe marking is recognized by the camera placed in the work area 2. Next, an image analysis is performed on a limited area that is an area near the stripe marking, and thus the two-dimensional bar-code is highly precisely read at a fast speed. The place where the two-dimensional bar-code is read and the time thereof are stored in association with each other. The two-dimensional bar-code registers, for example, a worker ID and a medicine kind ID. Accordingly, the time at which the two-dimensional bar-code is read, the place where the two-dimensional bar-code is read (in this example, the work area 2), a camera ID, and a worker ID, and/or the like, are stored in association with one another.

A "prescription ID", a "patient ID", a "medicine kind ID", and a "dosage" can be obtained from read information through a recognition of a marking and various codes, but are information difficult to read in association with sound, a thermal image, and a colored marking.
Items, such as a "work area ID", an "image-capture start time", and a "camera ID" can be read from the header information of an image-sound signal, so that it is easy to read such items through any recognition method.
Regarding a "worker ID", in recognition of a marking and various codes using a character marking put on a portion of a worker like the back of the worker's hand in order to recognize the worker, a scheme can be employed which reads information on the marking and the code.
A "work evaluation" in 2901 is created by a calculation using obtainable information as read information and a reference set in advance, and is an evaluation based on a "waiting time" that will be discussed in detail together with an explanation for a workflow managing operation. Such an evaluation is updated and is a final evaluation value when the work ends.
The index item of the present disclosure is not limited to the item explained above, other items can be used in accordance with the work and the facility which activate the system of the present disclosure, and an optimized index item such that the number of items is reduced can be set arbitrary.

As is clear from the above explanation, various items are used as data items that are the indexes of image-sound data, but some of those are difficult to obtain without a specific recognition scheme.
Conversely, a scheme that can obtain various data items as read information like a code recognition has strict recognition conditions, and is a vulnerable recognition scheme which often results in an incapability of recognition and a false recognition and which needs a strict adjustment of illumination, and/or the like, and a precise adjustment of image-capture parameters.
A recognition based on a thermal image which can merely recognize the progress of the work and which is difficult to obtain other information is a scheme of realizing a robust recognition that has little incapability of recognition and false recognition.
Moreover, as explained above, the vulnerability of a recognition can be compensated and necessary resources, such as a CPU and a memory, can be saved by combining a marking and a code.

It is desirable to combine a plurality of recognition schemes employed in the present embodiment and in order to compensate one another and to prevent any empty space of the necessary index items, which has a large contribution to prevent the lack of traceability information.

### Workflow Managing Operation by System Control Center

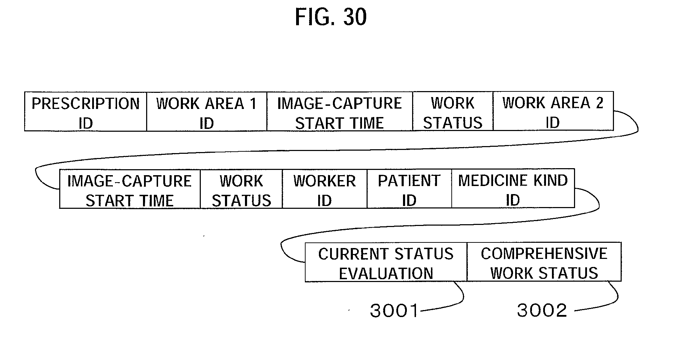

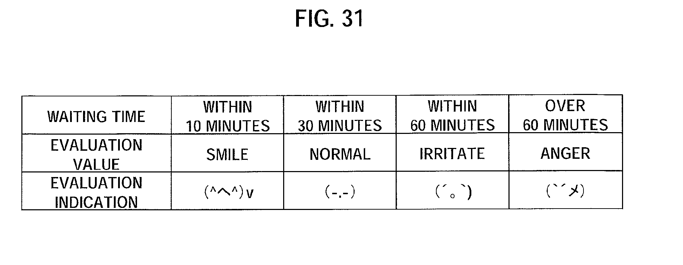

FIG. 30 shows a structure of data referred for a workflow management.
Since two locations that are the work area 1 and the work area 2 are necessary in order to complete a work relating to a prescription, pieces of data on an image-capture start time and a work status are obtained for each work area.
The image-capture start time and the work status following each work area ID are information on that work area. The item "work status" takes four values that are "not started", "work in progress", "interrupted", and "work finished", and is a value indicating whether or not a scheduled work is not yet started in the work area, whether or not the work is started and is in progress, whether or not it is interrupted, and whether or not it is already finished.
An item "evaluation for current status" of 3001 is a value that is a "waiting time" which is a difference between the first image-capture time of the work in the work area 1 and a current time and which is evaluated based on a predetermined reference. FIG. 31 is an evaluation table, and an evaluation is made based on an evaluation value derived by calculating the waiting time and by referring the evaluation table.
An item "comprehensive work status" of 3002 is referred in order to extract data as management target data when four values that are "not started", "work in progress", "interrupted", and "work finished" are determined and written for the whole work relating to a prescription ID like the ones indicated for each work area in order to manage a workflow. In other words, data relating to a work in progress that takes statuses of "work in progress" and "interrupted" is selected and evaluated. Regarding the selected data, a waiting time is calculated based on a difference between a current time and a first image-capture start time in the work area 1, and the evaluation table shown in FIG. 31 is referred in order to extract an evaluation value.
It is necessary to update the waiting time at a predetermined short cycle, and updating of each two minutes is applied in the present embodiment. However, the updating cycle of the waiting time of the present disclosure can take other updating cycles as needed.

In the case of FIG. 31, an evaluation value is obtained based on the "waiting time", but an evaluation value can be obtained based on information other than a time, e.g., information on a medicine kind and a dosage included in a medicine kind ID. When a large kind of medicines and a large dosage thereof are used, typically, a patient can be expected as being in bad health, and an evaluation value can be obtained in such a way that the evaluation value becomes small inversely proportional to the medicine kind and the dosage. Conversely, when the medicine kind is little and the dosage is little, the patient can be expected as being in good health, and an evaluation value is obtained so as to be large.

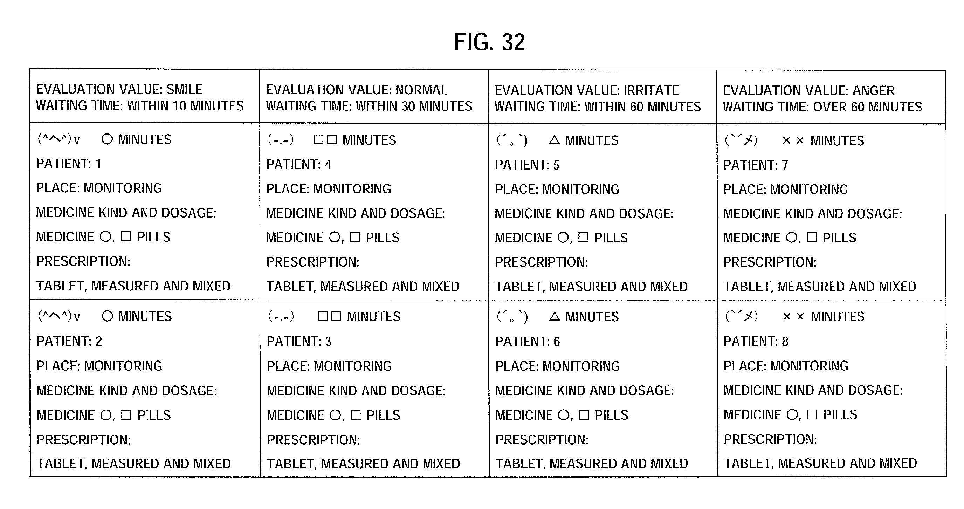

FIG. 32 shows workflow management assist information created based on the above-explained evaluation. Patients are sorted and arranged for each evaluation, the characteristic of the patient having a problem and a place thereof are indicated, thereby assisting the workflow management.
Regarding an indication of an evaluation to each data, a "patient name", a "place", a "prescription", a "medicine kind", and a "dosage" that are information referred in order to perform a workflow management in detail are also indicated at the same time. Those pieces of referred information can be obtained by detecting a patient ID, a work area ID, a prescription ID, a medicine kind ID, and a dosage included in the index, and by referring "descriptions for indication" prepared in advance and a dictionary (a table for converting an ID into a description for indication) stored for each item of the index.

For example, the workflow management assist information are created by referring to at least one of the followings: an image-capture time; a work area ID; and a standard time set in advance for each work area or work. As shown in the figure, the workflow management assist information is listed based on, for example, time information. The standard time is an arbitrary time, such as a time while a pharmacy is being opened, a time during a lunch hour.

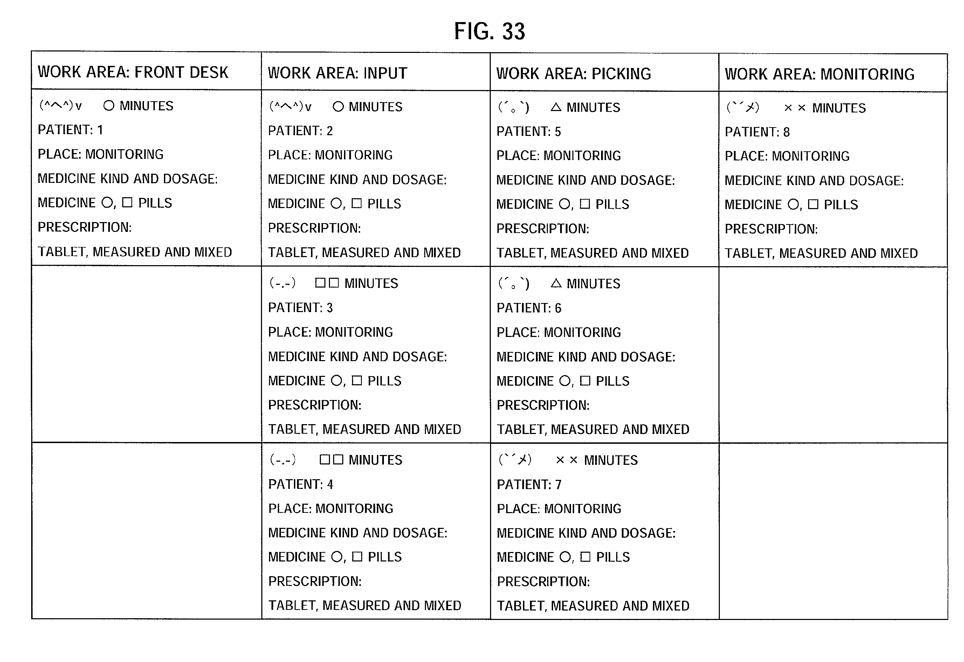

FIG. 33 shows workflow management assist information created based on a work area. What evaluation a patient made is sorted for each work area in order to collectively indicate and output the characteristic of a place over the workflow where a problem arises, thereby assisting the workflow management.

### Searching and Displaying of Traceability Information

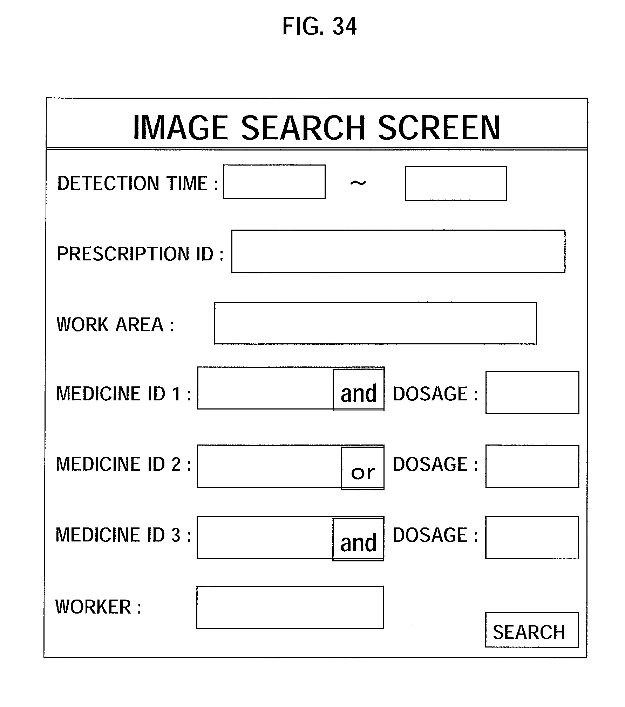

FIG. 34 is a search screen displayed on the browser terminal 108. A brief explanation will be given of an inputting of a key that is a search item. The search items are basically recognized and activated through an AND searching of the input keys except three medicine kind IDs. A search time can specify a desired time range, and for example, a searching can be made within a certain range like from 9:00 AM, April 23, 2009 to 11:00 AM, April 23, 2009. Items that are medicine kind IDs 1 to 3 allow a selection of an AND searching or an OR searching together with respective dosages.

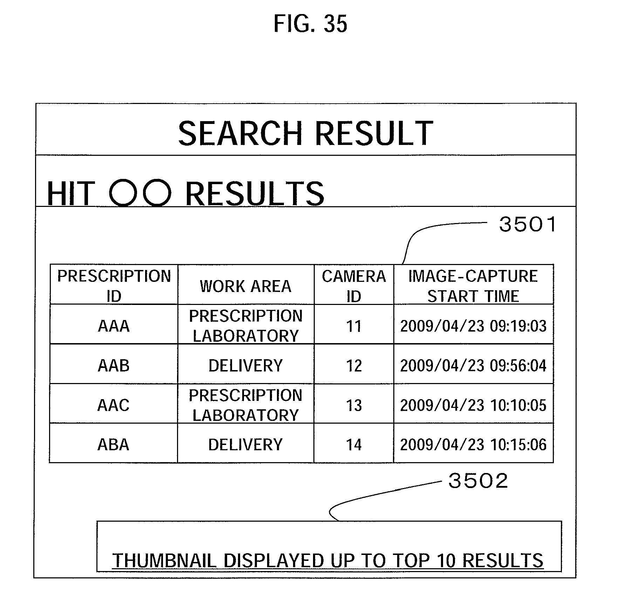

FIG. 35 is a reference chart screen of a result of image searching. Image data hit through this screen has index items displayed for each work sequence, and the image of the corresponding work sequence is displayed by clicking a field. 3501 is an illustrative reference chart displayed. By clicking a thumbnail display button 3502 displayed at the lower part, it becomes possible to collectively browse small images of hit files up to the top 10.

The present disclosure is not limited to the above-explained schemes and search screen, and search items and searching methods requisite for accomplishing the traceability can be applied to varieties of data handled by the present disclosure.

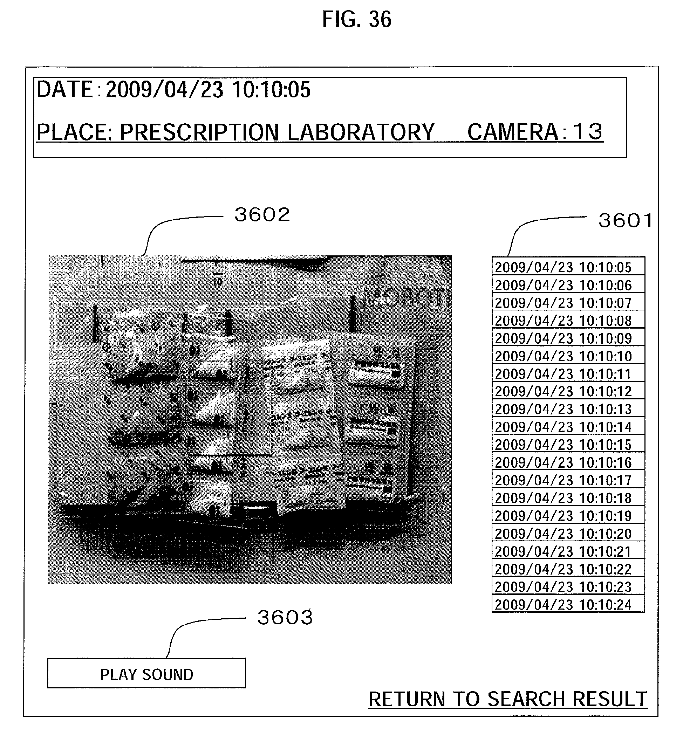

FIG. 36 is a browser screen displaying and playing data relating to the selected work sequence. The work sequence as a search result is successively recorded for each approximately one second as is indicated on an image-capture time list 3601, and it is possible to efficiently trace whether or not an appropriate work is done for a predetermined work.
When an image-capture time indicated on the list 3601 is clicked, a corresponding image 3602 is displayed, and when a play button 3603 is clicked, sound recorded within that time is played by a predetermined time.

This application claims a priority based on Japanese Patent Application No. 2009-105858, and the entire specification, claims, and drawings of Japanese Patent Application No. 2009-105858 are herein incorporated in this specification by reference.

### Industrial Applicability

The monitoring system of the present disclosure records an operation work at a work area of a work that requires a careful operation work, can rapidly search for a clear image or sound relating to a breakdown or an error when such a breakdown or an error occurs, enables the verification of work, and is very applicable to an industry in which superior traceability is in a high demand.
Moreover, by understanding a time or work area, and/or the like, that recognizes a marking, and/or the like, a workflow is managed by outputting assist information that evaluates the work status to contributing to the work. Thus, even this point is applicable to the industry.
Furthermore, by supplementarily employing recognition formula utilizing a target with different recognition properties, such as a code, a marking, a thermal image, or sound, superior traceability information can be extracted in which a lot of information is used as indexes, while a robust system with respect to troubles such as a false recognition and a recognition incompatibility, may be provided. Thus, the applicability in a work monitoring industry is high.

### Explanation of the Reference Numerals

100 Network
101 to 103 Work area
104 Image-sound analyzing means
105 Image-sound storing means
106 Data managing means
107 System control center
108 Browser terminal

## Claims

1. A monitoring system for a pharmacy work, comprising:
(1) a motion/still image-capture device including a WEB camera connected to a network, which sets an image-capture parameter in an image-capture range determined at each work area established in a pharmacy, successively captures images of work progression in the work area within the image-capture range, and transmits the captured image data to a predetermined transmission destination;
(2) a marking indicator which can be disposed in the image-capture range and freely moved by a worker having an intention of indicating that the work performed will be subjected to monitoring;
(3) image storing means which receives the image data, stores the received data, and connects to the network; and
(4) analyzing means which receives the image data, scans the image, extracts a marking area where two stripe markings intersect with each other at a right angle, recognizes the marking, and is connected to the network, wherein
when the marking is recognized by the analyzing means in the image data transmitted by the image-capture device, a scanned image area is specified as a bar-code area combining the marking area with the marking, an index at least including an image-capture time of the marking and a work area ID containing additional information read-out from the bar-code area is created, and the image data is stored in the image storing means associated with the index.

2. The monitoring system according to claim 1, wherein the marking indicator is at least one selected from the group consisting of a work instruction for the work, a prescription holder, a medicine tray, and a prescription.

3. The monitoring system according to claim 1, wherein
the marking indicator is a work bench for carrying out the work in each work area, and
the marking is put on a work surface of the work bench.

4. The monitoring system according to claim 1, wherein
an indication is provided which indicates a position where the marking indicator is disposed within the image-capture range established in each work area, and which is used as a guide by the worker in the work area in order to place the marking or an obj ect to be marked at an appropriate position for marking recognition.

5. The monitoring system according to claim 1, wherein
the image is a moving image, and
video data relating to the work progression that is established to be one work sequence based on the recognition or non-recognition of the marking is stored as a file.

6. The monitoring system according to claim 1, wherein
information included in the created index is associated with a time recognized by the marking indicator moving the work area in accordance with a predetermined work flow, and
workflow management assist information is created with reference to at least one of the image-capture time, the work area ID, and a standard time set in advance for each work area or work.
